(19) Europäisches Patentamt / European Patent Office / Office européen des brevets

(11) **EP 4 693 969 A1**

(12) **EUROPEAN PATENT APPLICATION**
published in accordance with Art. 153(4) EPC

(43) Date of publication:
**11.02.2026 Bulletin 2026/07**

(21) Application number: **24785415.1**

(22) Date of filing: **04.04.2024**

(51) International Patent Classification (IPC):
*H04L 1/00* (2006.01)      *H04L 1/08* (2006.01)
*H04L 5/14* (2006.01)

(52) Cooperative Patent Classification (CPC):
**H04L 1/00; H04L 1/08; H04L 5/14**

(86) International application number:
**PCT/KR2024/095667**

(87) International publication number:
**WO 2024/210726 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.04.2023 KR 20230044887**

(71) Applicant: **LG Electronics Inc.**
**Yeongdeungpo-gu**
**Seoul 07336 (KR)**

(72) Inventors:
• YOU, Hyangsun
  Seoul 06772 (KR)
• KO, Hyunsoo
  Seoul 06772 (KR)

(74) Representative: **Jung, Minkyu**
**Wuesthoff & Wuesthoff**
**Patentanwälte und Rechtsanwalt PartG mbB**
**Schweigerstraße 2**
**81541 München (DE)**

(54) **OPERATING METHOD OF APPARATUS IN WIRELESS COMMUNICATION SYSTEM, AND APPARATUS USING SAME METHOD**

(57)      Provided are an operating method of an apparatus in a wireless communication system, and an apparatus using the method. The method comprises determining a size of a transport block (TB) and transmitting the TB having the size from each slot of a plurality of slots on a physical uplink shared channel (PUSCH). Here, the plurality of slots comprises a full duplex (FD) slot capable of simultaneously performing an uplink operation and a downlink operation by using different frequency bands in a slot, and a half duplex (HD) slot capable of performing an uplink operation or a downlink operation in a slot, and the size is determined on the basis of a value obtained by applying a scaling factor to the "total number ($N_{RE}$) of resource elements assigned for the PUSCH" determined on the basis of a physical resource block (PRB) transmitted from the HD slot.

FIG. 20

Determining the size of a transport block (TB) — S201

Transmitting the TB having the size through a physical uplink shared channel (PUSCH) in each slot of a plurality of slots, wherein the plurality of slots include an FD (full duplex) slot capable of simultaneously performing an uplink operation and a downlink operation using different frequency bands within the slot and an HD (half duplex) slot capable of performing an uplink operation or a downlink operation within the slot, and the size is determined based on a value obtained by applying a scaling factor to the 'number of total resource elements allocated for PUSCH ($N_{RE}$)' determined based on a physical resource block (PRB) transmitted in the HD slot — S202

**Description**

## TECHNICAL FIELD

This disclosure relates to a method of operating a device in a wireless communication system and a device using the method.

## BACKGROUND ART

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultra-reliable and low latency communication (URLLC) is discussed. This new technology may be called new radio access technology (new RAT or NR) in the present disclosure for convenience.

In NR or post-NR wireless communication systems, full duplex (FD) operation can be performed. When performing FD operation, the device can perform downlink reception and uplink transmission simultaneously in a specific time resource. Half duplex (HD) operation differs in that only one of downlink reception and uplink transmission can be performed in a given time resource. For FD operation, i) some frequency resources in the same time resource can be allocated as downlink subbands and other some frequency resources as uplink subbands (this may be referred to as subband FD, or SBFD (subband-wise full duplex)), or ii) frequency resources that can be used for both downlink reception and uplink transmission in the same time resource can be allocated (this may be referred to as spectrum shared FD, or SSFD (spectrum-sharing full duplex)).

To improve communication reliability and/or increase coverage, certain channels may be transmitted repeatedly. For example, the physical uplink shared channel (PUSCH), an uplink data channel, may be transmitted repeatedly across multiple slots.

However, when transmitting PUSCH, the size of the transport block (TB) transmitted through the PUSCH is determined based on the number of physical resource blocks (PRBs) allocated for PUSCH transmission. If the time-domain resources used for repeated PUSCH transmission are mixed with an FD slot that operate as FD and a slot that does not operate as FD, such as a HD slot that operates as HD, the number of PRBs used for PUSCH transmission in each slot may be different.

Conventional techniques assume that time-domain resources used for repeated PUSCH transmissions include slots of the same type. Therefore, there exists an issue where the method for determining the TBS for repeated PUSCH transmissions involving different types of slots is unclear. Therefore, a method for determining the TB size for repeated PUSCH transmissions involving different types of slots is needed.

## DISCLOSURE

### TECHNICAL PROBLEM

The technical problem to be solved by the present disclosure is to provide a method of operating a device in a wireless communication system and a device using the method.

### TECHNICAL SOLUTION

A method of operating a device in a wireless communication system and a device using the method are provided. According to the method, a user equipment (UE) determines a size of a transport block (TB) and transmits the TB having the size through a physical uplink shared channel (PUSCH) in each of a plurality of slots. Here, the plurality of slots include a full duplex (FD) slot capable of simultaneously performing an uplink operation and a downlink operation using different frequency bands within a slot, and a half duplex (HD) slot capable of performing an uplink operation or a downlink operation within a slot, and the size is determined based on a value obtained by applying a scaling factor to a 'total number of resource elements allocated for PUSCH ($N_{RE}$)' determined based on a physical resource block (PRB) transmitted in the HD slot.

In another aspect, a UE, apparatus, and computer-readable medium for executing the above method is provided.

In another aspect, a method of operating a base station and a base station using the method are provided. According to the operating method of the base station, the base station transmits scheduling information for scheduling uplink transmission to a user equipment (UE) and receives a transport block (TB) having a specific transport block size (TBS) from the UE through a physical uplink shared channel (PUSCH) in each of a plurality of slots based on the scheduling information. The plurality of slots include a full duplex (FD) slot capable of simultaneously performing an uplink operation and a downlink operation using different frequency bands within a slot, and a half duplex (HD) slot capable of performing an uplink operation or a downlink operation within a slot, and the TBS is determined based on a value obtained by applying a scaling factor to a 'total number of resource elements allocated for PUSCH ($N_{RE}$)' determined based on a physical resource block (PRB) transmitted in the HD slot.

## ADVANTAGEOUS EFFECTS

According to the method of the present disclosure, when a PUSCH repeated transmission is performed across different types of slots in the time domain, for example, slots where FD slots and HD slots are mixed, the TBS can be determined by reflecting the frequency domain resources actually used in each slot, thereby reducing the probability of error occurrence.

Additionally, it is possible to avoid ambiguity in determining TBS when a PUSCH repeated transmission is performed across different types of slots in the time domain.

## BRIEF DESCRIPTION OF THE DRAWINGS

FIG. 1 illustrates a wireless communication system to which the present disclosure can be applied.
FIG. 2 is a block diagram showing the radio protocol architecture for the user plane.
FIG. 3 is a block diagram showing the radio protocol structure for the control plane.
FIG. 4 illustrates the system structure of a next-generation radio access network (NG-RAN) to which NR is applied.
FIG. 5 illustrates the functional division between NG-RAN and 5GC.
FIG. 6 illustrates a frame structure that can be applied in NR.
FIG. 7 illustrates the slot structure of an NR frame.
FIG. 8 illustrates the CORESET.
FIG. 9 shows an example of a frame structure for a new wireless access technology.
FIG. 10 illustrates the structure of a self-contained slot.
FIG. 11 illustrates physical channels and typical signal transmission.
FIG. 12 is an example of PUSCH repetition type A.
FIG. 13 is an example of PUSCH repetition type B.
FIG. 14 shows examples of how to apply full duplex within an intra-carrier.
FIG. 15 shows an example in which a time resource operating in half duplex (HD) and a time resource operating in full duplex (FD) such as SBFD or SSFD exist together.
FIG. 16 shows an example of a first time resource, a second time resource, a first frequency resource and a second frequency resource.
FIG. 17 shows another example of a first time resource, a second time resource, a first frequency resource, and a second frequency resource.
FIG. 18 illustrates frequency resources allocated for PUSCH transmission.
FIG. 19 illustrates bits transmitted on each PUSCH in PUSCH repeated transmission.
FIG. 20 illustrates an operation method of a UE in a wireless communication system.
FIG. 21 illustrates the signaling process and operation between a base station and a UE when applying the method of FIG. 20.
FIG. 22 illustrates a wireless device that can be applied the present specification.
FIG. 23 shows an example of a signal processing module structure.
FIG. 24 shows another example of the structure of a signal processing module in a transmission device.
FIG. 25 shows an example of a wireless communication device according to an implementation example of the present disclosure.
FIG. 26 shows another example of a wireless device.
FIG. 27 illustrates the communication system 1 applied to this specification.

## MODE FOR INVENTION

In the present specification, "A or B" may mean "only A", "only B" or "both A and B". In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (PDCCH)", it may mean that "PDCCH" is proposed as an example of the "control information". In other words, the "control information" of the present specification is not limited to "PDCCH", and "PDCCH" may be proposed as an example of the "control information". In addition, when indicated as "control information (i.e., PDCCH)", it may also mean that "PDCCH" is proposed as an example of the "control information".

Technical features described individually in one figure in the present specification may be individually implemented, or may be simultaneously implemented.

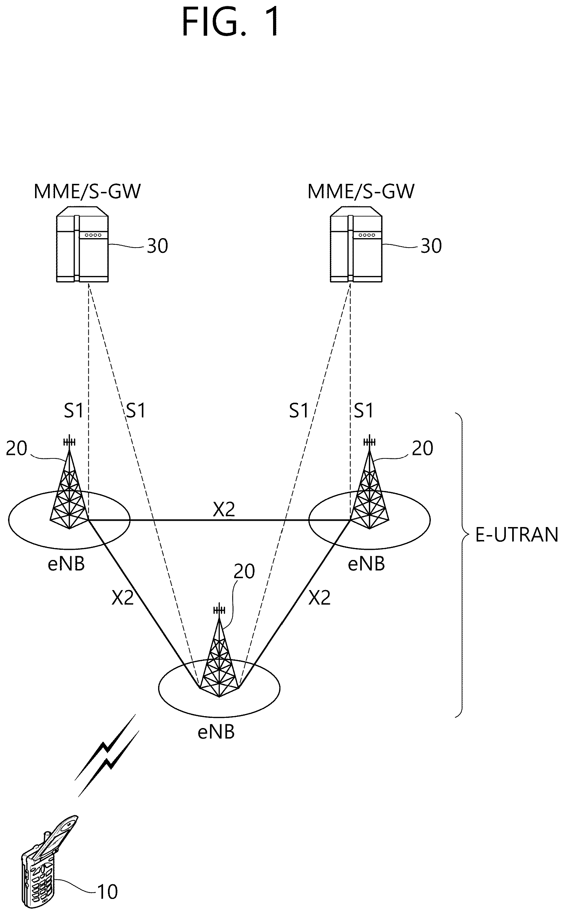

FIG. 1 illustrates a wireless communication system to which the present disclosure can be applied. This may also be called E-UTRAN (Evolved-UMTS Terrestrial Radio Access Network), or LTE (Long Term Evolution)/LTE-A system.

The E-UTRAN includes a base station (BS) 20 which provides a control plane and a user plane to a user equipment (UE) 10. The UE 10 may be fixed or mobile, and may be referred to as another terminology, such as a mobile station (MS), a user terminal (UT), a subscriber station (SS), a mobile terminal (MT), a wireless device, terminal etc. The BS 20 is generally a fixed station that communicates with the UE 10 and may be referred to as another terminology, such as an evolved node-B (eNB), a base transceiver system (BTS), an access point, etc.

The BSs are interconnected by means of an X2 interface. The BSs are also connected by means of an S1 interface to an evolved packet core (EPC) 30, more specifically, to a mobility management entity (MME) through S1-MME and to a serving gateway (S-GW) through S1-U.

The EPC 30 includes an MME, an S-GW, and a packet data network-gateway (P-GW). The MME has access information of the UE or capability information of the UE, and such information is generally used for mobility management of the UE. The S-GW is a gateway having an E-UTRAN as an end point. The P-GW is a gateway having a PDN as an end point.

Layers of a radio interface protocol between the UE and the network can be classified into a first layer (L1), a second layer (L2), and a third layer (L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

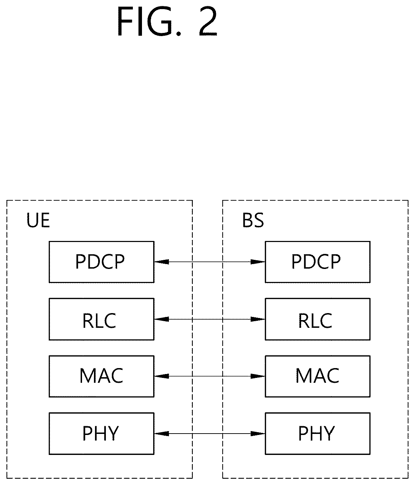

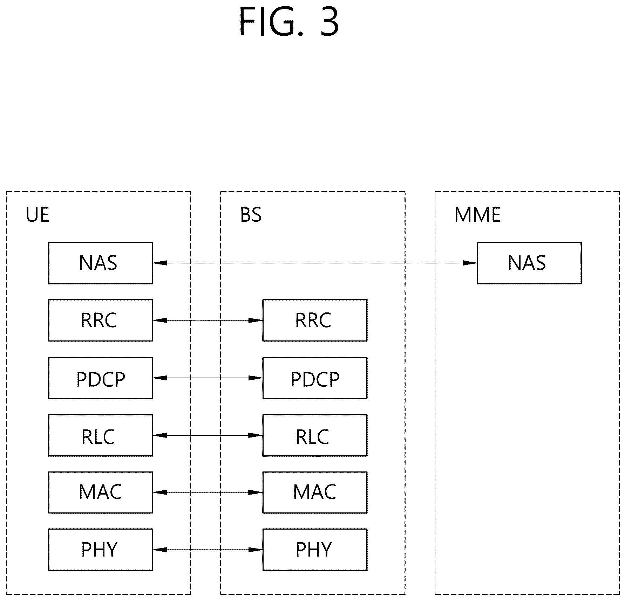

FIG. 2 is a block diagram showing the radio protocol architecture for the user plane. FIG. 3 is a block diagram showing the radio protocol structure for the control plane. The user plane is a protocol stack for user data transmission. The control plane is a protocol stack for control signal transmission.

Referring to FIG. 2 and FIG. 3, a PHY layer provides an upper layer (=higher layer) with an information transfer service through a physical channel. The PHY layer is connected to a medium access control (MAC) layer which is a higher layer of the PHY layer through a transport channel. Data is transferred between the MAC layer and the PHY layer through the transport channel. The transport channel is classified according to how and with what characteristics data is transferred through a radio interface.

Data is moved between different PHY layers, that is, the PHY layers of a transmitter and a receiver, through a physical channel. The physical channel may be modulated according to an Orthogonal Frequency Division Multiplexing (OFDM) scheme, and use the time and frequency as radio resources.

The functions of the MAC layer include mapping between a logical channel and a transport channel and multiplexing and demultiplexing to a transport block that is provided through a physical channel on the transport channel of a MAC Service Data Unit (SDU) that belongs to a logical channel. The MAC layer provides service to a Radio Link Control (RLC) layer through the logical channel.

The functions of the RLC layer include the concatenation, segmentation, and reassembly of an RLC SDU. In order to guarantee various types of Quality of Service (QoS) required by a Radio Bearer (RB), the RLC layer provides three types of operation mode: Transparent Mode (TM), Unacknowledged Mode (UM), and Acknowledged Mode (AM). AM RLC provides error correction through an Automatic Repeat Request (ARQ).

The RRC layer is defined only on the control plane. The RRC layer is related to the configuration, reconfiguration, and release of radio bearers, and is responsible for control of logical channels, transport channels, and PHY channels. An RB means a logical route that is provided by the first layer (PHY layer) and the second layers (MAC layer, the RLC layer, and the PDCP layer) in order to transfer data between UE and a network.

The function of a Packet Data Convergence Protocol (PDCP) layer on the user plane includes the transfer of user data and header compression and ciphering. The function of the PDCP layer on the user plane further includes the transfer and encryption/integrity protection of control plane data.

What an RB is configured means a process of defining the characteristics of a wireless protocol layer and channels in order to provide specific service and configuring each detailed parameter and operating method. An RB can be divided into two types of a Signaling RB (SRB) and a Data RB (DRB). The SRB is used as a passage through which an RRC message is transmitted on the control plane, and the DRB is used as a passage through which user data is transmitted on the user plane.

If RRC connection is established between the RRC layer of UE and the RRC layer of an E-UTRAN, the UE is in the RRC connected state. If not, the UE is in the RRC idle state.

A downlink transport channel through which data is transmitted from a network to UE includes a broadcast channel (BCH) through which system information is transmitted and a downlink shared channel (SCH) through which user traffic or control messages are transmitted. Traffic or a control message for downlink multicast or broadcast service may be transmitted through the downlink SCH, or may be transmitted through an additional downlink multicast channel (MCH). Meanwhile, an uplink transport channel through which data is transmitted from UE to a network includes a random access channel (RACH) through which an initial control message is transmitted and an uplink shared channel (SCH) through which user traffic or control messages are transmitted.

Logical channels that are placed over the transport channel and that are mapped to the transport channel include a broadcast control channel (BCCH), a paging control channel (PCCH), a common control channel (CCCH), a multicast control channel (MCCH), and a multicast traffic channel (MTCH).

The physical channel includes several OFDM symbols in the time domain and several subcarriers in the frequency domain. One subframe includes a plurality of OFDM symbols in the time domain. An RB is a resources allocation unit, and includes a plurality of OFDM symbols and a plurality of subcarriers. Furthermore, each subframe may use specific subcarriers of specific OFDM symbols (e.g., the first OFDM symbol) of the corresponding subframe for a physical downlink control channel (PDCCH), that is, an L1/L2 control channel. A Transmission Time Interval (TTI) is a unit time for subframe transmission.

Hereinafter, a new radio access technology (new RAT, NR) will be described.

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultra-reliable and low latency communication (URLLC) is discussed. This new technology may be called new RAT or NR in the present disclosure for convenience.

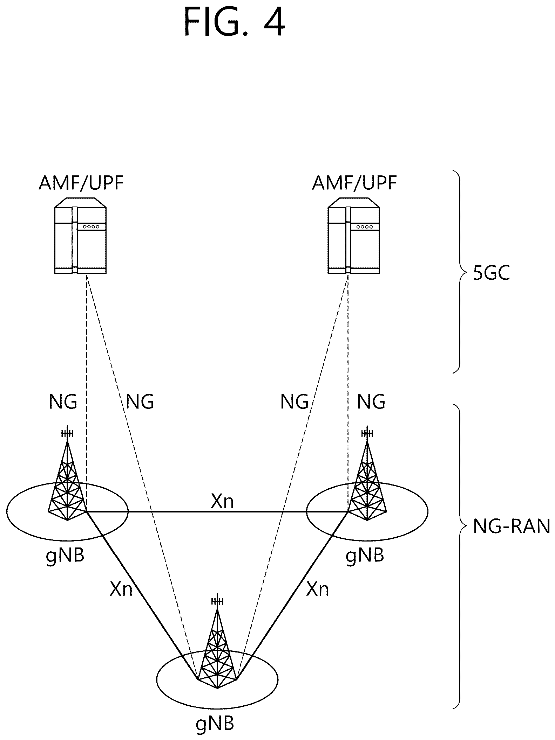

FIG. 4 illustrates a system structure of a next generation radio access network (NG-RAN) to which NR is applied.

Referring to FIG. 4, the NG-RAN may include a gNB and/or an eNB that provides user plane and control plane protocol termination to a UE. FIG. 4 illustrates the case of including only gNBs. The gNBs(eNBs) are connected by an Xn interface. The gNB and the eNB are connected to a 5G core network (5GC) via an NG interface. More specifically, the gNB and the eNB are connected to an access and mobility management function (AMF) via an NG-C interface and connected to a user plane function (UPF) via an NG-U interface.

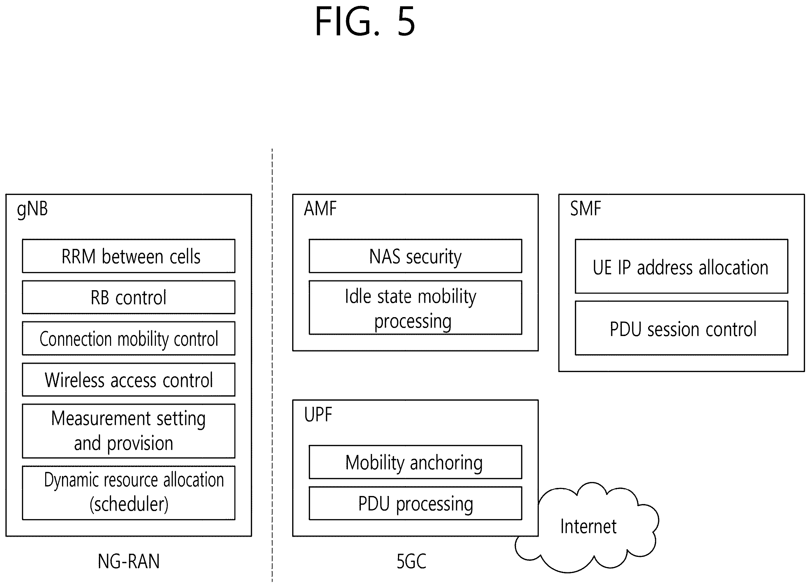

FIG. 5 illustrates a functional division between an NG-RAN and a 5GC.

Referring to FIG. 5, the gNB may provide functions such as an inter-cell radio resource management (Inter Cell RRM), radio bearer management (RB control), connection mobility control, radio admission control, measurement configuration & provision, dynamic resource allocation, and the like. The AMF may provide functions such as NAS security, idle state mobility handling, and so on. The UPF may provide functions such as mobility anchoring, PDU processing, and the like. The SMF may provide functions such as UE IP address assignment, PDU session control, and so on.

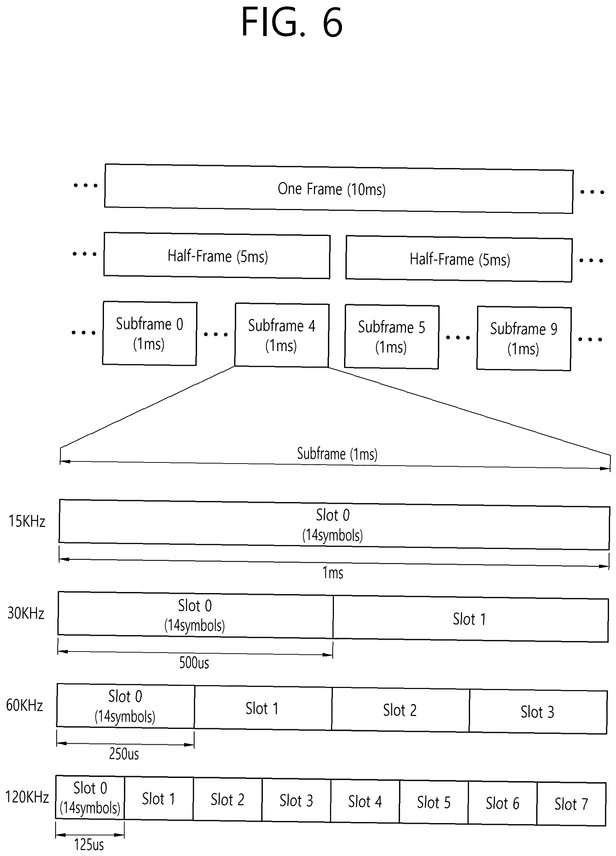

FIG. 6 illustrates an example of a frame structure that may be applied in NR.

Referring to FIG. 6, in the NR, a radio frame (hereinafter, also referred to as a frame) may be used in uplink and downlink transmissions. The frame has a length of 10ms, and may be defined as two 5ms half-frames (HFs). The HF may be defined as five 1ms subframes (SFs). The SF may be divided into one or more slots, and the number of slots within the SF depends on a subcarrier spacing (SCS). Each slot includes 12 or 14 OFDM(A) symbols according to a cyclic prefix (CP). In case of using a normal CP, each slot includes 14 symbols. In case of using an extended CP, each slot includes 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following table 1 illustrates a subcarrier spacing configuration $\mu$.

[Table 1]

| μ | $\Delta f=2^{\mu}\cdot 15$[kHz] | Cyclic prefix (CP) |
|---|---|---|
| 0 | 15 | Normal |
| 1 | 30 | Normal |
| 2 | 60 | Normal Extended |
| 3 | 120 | Normal |
| 4 | 240 | Normal |

The following table 2 illustrates the number of slots in a frame ($N^{frame,\mu}_{slot}$), the number of slots in a subframe ($N^{subframe,\mu}_{slot}$), the number of symbols in a slot ($N^{slot}_{symb}$), and the like, according to subcarrier spacing configurations μ.

[Table 2]

| μ | $N^{slot}_{symb}$ | $N^{frame,\mu}_{slot}$ | $N^{subframe,\mu}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

FIG. 6 illustrates a case of μ=0, 1, 2, 3.

Table 2-1 below illustrates that the number of symbols per slot, the number of slots per frame, and the number of slots per subframe vary depending on the SCS, in case of using an extended CP.

[Table 2-1]

| SCS($15*2^{\mu}$) | $N^{slot}_{symb}$ | $N^{frame,\mu}_{slot}$ | $N^{subframe,\ \mu}_{slot}$ |
|---|---|---|---|
| 60KHz (μ=2) | 12 | 40 | 4 |

In an NR system, OFDM(A) numerologies (e.g., SCS, CP length, and so on) may be differently configured between a plurality of cells integrated to one UE. Accordingly, an (absolute time) duration of a time resource (e.g., SF, slot or TTI) (for convenience, collectively referred to as a time unit (TU)) configured of the same number of symbols may be differently configured between the integrated cells.

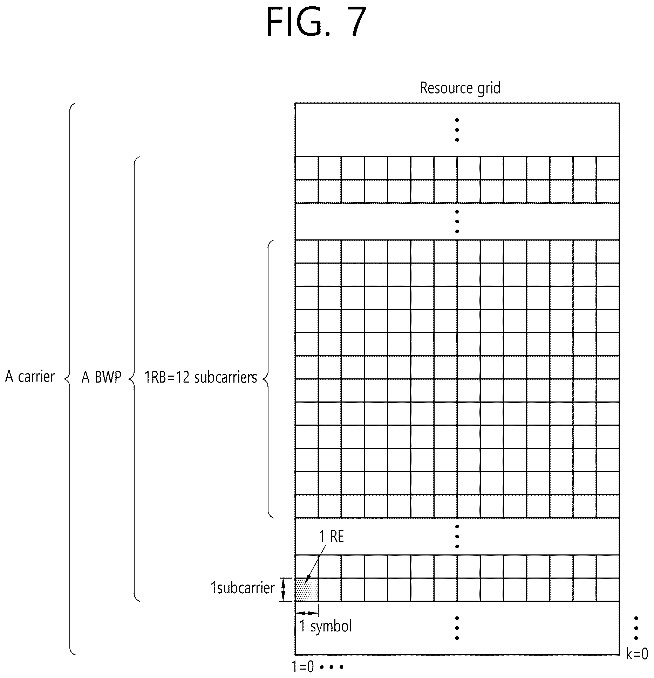

FIG. 7 illustrates a slot structure.

A slot may include a plurality of symbols in a time domain. For example, in case of a normal CP, one slot may include 14 symbols (or 7 symbols). However, in case of an extended CP, one slot may include 12 symbols (or 6 symbols). A carrier may include a plurality of subcarriers in a frequency domain. A resource block (RB) may be defined as a plurality of consecutive subcarriers (e.g., 12 subcarriers) in the frequency domain. A bandwidth part (BWP) may be defined as a plurality of consecutive (physical) resource blocks ((P)RBs) in the frequency domain, and the BWP may correspond to one numerology (e.g., SCS, CP length, and so on). The carrier may include up to N (e.g., 5) BWPs. Data communication may be performed via an active BWP, and only one BWP may be activated for one UE. In a resource grid, each element may be referred to as a resource element (RE), and one complex symbol may be mapped thereto.

A physical downlink control channel (PDCCH) may include one or more control channel elements (CCEs) as illustrated in the following table 3.

[Table 3]

| Aggregation level | Number of CCEs |
|---|---|
| 1 | 1 |
| 2 | 2 |

(continued)

| Aggregation level | Number of CCEs |
|---|---|
| 4 | 4 |
| 8 | 8 |
| 16 | 16 |

That is, the PDCCH may be transmitted through a resource including 1, 2, 4, 8, or 16 CCEs. Here, the CCE includes six resource element groups (REGs), and one REG includes one resource block in a frequency domain and one orthogonal frequency division multiplexing (OFDM) symbol in a time domain.

Monitoring implies decoding of each PDCCH candidate according to a downlink control information (DCI) format. The UE monitors a set of PDCCH candidates in one or more CORESETs (to be described below) on an active DL BWP of each activated serving cell in which PDCCH monitoring is configured, according to a corresponding search space set.

A new unit called a control resource set (CORESET) may be introduced in the NR. The UE may receive a PDCCH in the CORESET.

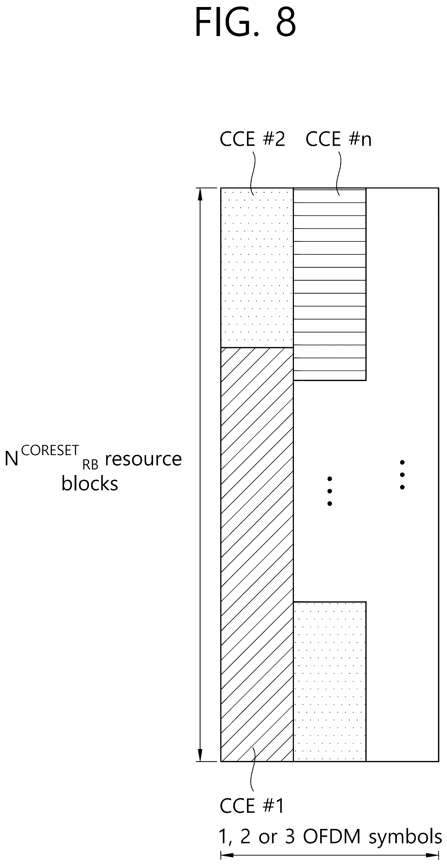

FIG. 8 illustrates CORESET.

Referring to FIG. 8, the CORESET includes $N^{CORESET}_{RB}$ number of resource blocks in the frequency domain, and $N^{CORESET}_{symb} \in \{1, 2, 3\}$ number of symbols in the time domain. $N^{CORESET}_{RB}$ and $N^{CORESET}_{symb}$ may be provided by a base station via higher layer signaling. As illustrated in FIG. 8, a plurality of CCEs (or REGs) may be included in the CORESET.

The UE may attempt to detect a PDCCH in units of 1, 2, 4, 8, or 16 CCEs in the CORESET. One or a plurality of CCEs in which PDCCH detection may be attempted may be referred to as PDCCH candidates.

A plurality of CORESETs may be configured for the UE.

A control region in the related art wireless communication system (e.g., LTE/LTE-A) is configured over the entire system BW used by a base station (BS). All the UEs, excluding some (e.g., eMTC/NB-IoT UE) supporting only a narrow band, shall be able to receive wireless signals of the entire system BW of the BS in order to properly receive/decode control information transmitted by the BS.

On the other hand, in NR, CORESET described above was introduced. CORESET is radio resources for control information to be received by the UE and may use only a portion, rather than the entirety of the system bandwidth. The BS may allocate the CORESET to each UE and may transmit control information through the allocated CORESET. In the NR, the UE may receive control information from the BS, without necessarily receiving the entire system BW.

The CORESET may include a UE-specific CORESET for transmitting UE-specific control information and a common CORESET for transmitting control information common to all UEs.

On the other hand, NR may require high reliability depending on the application field. In this situation, the target block error rate (BLER) for downlink control information (DCI) transmitted through a downlink control channel (e.g., physical downlink control channel: PDCCH) may be significantly lower than that of the prior art. As an example of a method to satisfy the requirement for such high reliability, the amount of content included in DCI can be reduced and/or the amount of resources used when transmitting DCI can be increased. At this time, the resources may include at least one of resources in the time domain, resources in the frequency domain, resources in the code domain, and resources in the spatial domain.

In NR, the following technologies/features can be applied.

<Self-contained subframe structure>

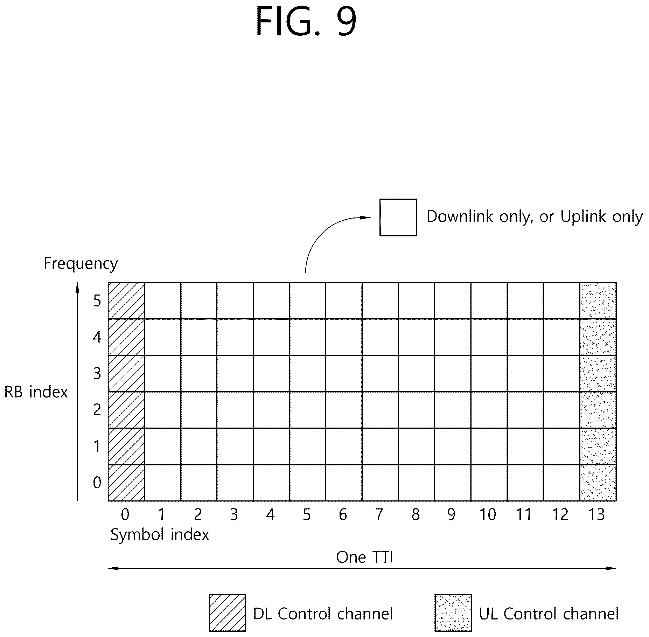

FIG. 9 shows an example of a frame structure for a new wireless access technology.

In NR, as shown in FIG. 9, a structure in which a control channel and a data channel are time-division-multiplexed within one TTI can be considered as a frame structure in order to minimize latency.

In FIG. 9, the hatched area represents the downlink control area, and the black portion represents the uplink control area. An unmarked area may be used for transmitting downlink data (DL data) or may be used for transmitting uplink data (UL data). The characteristic of this structure is that downlink (DL) transmission and uplink (UL) transmission proceed sequentially within one subframe, DL data can be transmitted within a subframe and UL ACK/NACK (Acknowledgement/Not-acknowledgement) can also be received. As a result, the time it takes to retransmit data when a data transmission error occurs is reduced, thereby minimizing the latency of final data transmission.

In this data and control TDMed subframe structure, a time gap for a base station and a UE to switch from a transmission mode to a reception mode or from the reception mode to the transmission mode may be required. To this end, some OFDM symbols at a time when DL switches to UL may be set to a guard period (GP) in the self-contained subframe structure.

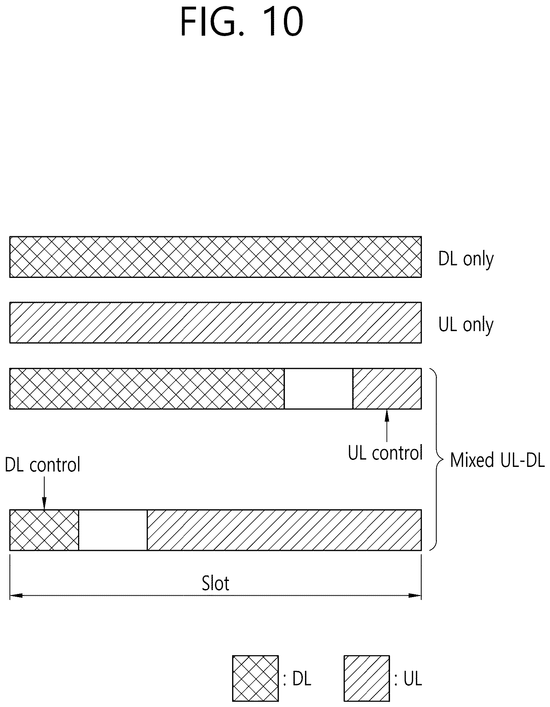

FIG. 10 illustrates a structure of a self-contained slot.

In an NR system, a DL control channel, DL or UL data, a UL control channel, and the like may be contained in one slot. For example, first N symbols (hereinafter, DL control region) in the slot may be used to transmit a DL control channel, and last M symbols (hereinafter, UL control region) in the slot may be used to transmit a UL control channel. N and M are integers greater than or equal to 0. A resource region (hereinafter, a data region) which exists between the DL control region and the UL control region may be used for DL data transmission or UL data transmission. For example, the following configuration may be considered. Respective durations are listed in a temporal order.

    1. DL only configuration,
    2. UL only configuration,
    3. Mixed UL-DL configuration:

$$\text{DL region} + \text{Guard period (GP)} + \text{UL control region,}$$

$$\text{DL control region} + \text{GP} + \text{UL region.}$$

    DL region: (i) DL data region, (ii) DL control region + DL data region.
    UL region: (i) UL data region, (ii) UL data region + UL control region.

A PDCCH may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Downlink control information (DCI), for example, DL data scheduling information, UL data scheduling information, and the like, may be transmitted on the PDCCH. Uplink control information (UCI), for example, ACK/NACK information about DL data, channel state information (CSI), and a scheduling request (SR), may be transmitted on the PUCCH. A GP provides a time gap in a process in which a BS and a UE switch from a TX mode to an RX mode or a process in which the BS and the UE switch from the RX mode to the TX mode. Some symbols at the time of switching from DL to UL within a subframe may be configured as the GP.

<Analog beamforming #1>

Wavelengths are shortened in millimeter wave (mmW) and thus a large number of antenna elements can be installed in the same area. That is, the wavelength is 1 cm at 30 GHz and thus a total of 100 antenna elements can be installed in the form of a 2-dimensional array at an interval of 0.5 lambda (wavelength) in a panel of $5 \times 5$ cm. Accordingly, it is possible to increase a beamforming (BF) gain using a large number of antenna elements to increase coverage or improve throughput in mmW.

In this case, if a transceiver unit (TXRU) is provided to adjust transmission power and phase per antenna element, independent beamforming per frequency resource can be performed. However, installation of TXRUs for all of about 100 antenna elements decreases effectiveness in terms of cost. Accordingly, a method of mapping a large number of antenna elements to one TXRU and controlling a beam direction using an analog phase shifter is considered. Such analog beamforming can form only one beam direction in all bands and thus cannot provide frequency selective beamforming.

Hybrid beamforming (BF) having a number B of TXRUs which is smaller than Q antenna elements can be considered as an intermediate form of digital BF and analog BF. In this case, the number of directions of beams which can be simultaneously transmitted are limited to B although it depends on a method of connecting the B TXRUs and the Q antenna elements.

<Analog beamforming #2>

When a plurality of antennas is used in NR, hybrid beamforming which is a combination of digital beamforming and analog beamforming is emerging. Here, in analog beamforming (or RF beamforming) an RF end performs precoding (or combining) and thus it is possible to achieve the performance similar to digital beamforming while reducing the number of RF chains and the number of D/A (or A/D) converters. For convenience, the hybrid beamforming structure may be represented by N TXRUs and M physical antennas. Then, the digital beamforming for the L data layers to be transmitted at the transmitting end may be represented by an N by L matrix, and the converted N digital signals are converted into analog signals via TXRUs, and analog beamforming represented by an M by N matrix is applied.

System information of the NR system may be transmitted in a broadcasting manner. In this case, in one symbol, analog beams belonging to different antenna panels may be simultaneously transmitted. A scheme of introducing a beam RS (BRS) which is a reference signal (RS) transmitted by applying a single analog beam (corresponding to a specific antenna panel) is under discussion to measure a channel per analog beam. The BRS may be defined for a plurality of antenna ports, and each antenna port of the BRS may correspond to a single analog beam. In this case, unlike the BRS, a synchronization signal or an xPBCH may be transmitted by applying all analog beams within an analog beam group so as to be correctly received by any UE.

In the NR, in a time domain, a synchronization signal block (SSB, or also referred to as a synchronization signal and physical broadcast channel (SS/PBCH)) may consist of 4 OFDM symbols indexed from 0 to 3 in an ascending order within a synchronization signal block, and a PBCH related with a primary synchronization signal (PSS), secondary synchronization signal (SSS), and demodulation reference signal (DMRS) may be mapped to the symbols. As described above, the synchronization signal block may also be represented by an SS/PBCH block.

In NR, since a plurality of synchronization signal blocks(SSBs) may be transmitted at different times, respectively, and the SSB may be used for performing initial access (IA), serving cell measurement, and the like, it is preferable to transmit the SSB first when transmission time and resources of the SSB overlap with those of other signals. To this purpose, the network may broadcast the transmission time and resource information of the SSB or indicate them through UE-specific RRC signaling.

In NR, beams may be used for transmission and reception. If reception performance of a current serving beam is degraded, a process of searching for a new beam through the so-called Beam Failure Recovery (BFR) may be performed.

Since the BFR process is not intended for declaring an error or failure of a link between the network and a UE, it may be assumed that a connection to the current serving cell is retained even if the BFR process is performed. During the BFR process, measurement of different beams (which may be expressed in terms of CSI-RS port or Synchronization Signal Block (SSB) index) configured by the network may be performed, and the best beam for the corresponding UE may be selected. The UE may perform the BFR process in a way that it performs an RACH process related with a beam yielding a good measurement result.

Now, a transmission configuration indicator (hereinafter, TCI) state will be described. The TCI state may be configured for each CORESET of a control channel, and may determine a parameter for determining an RX beam of the UE, based on the TCI state.

For each DL BWP of a serving cell, a UE may be configured for three or fewer CORESETs. Also, a UE may receive the following information for each CORESET.

    1) CORESET index p (one of 0 to 11, where index of each CORESET may be determined uniquely among BWPs of one serving cell),
    2) PDCCH DM-RS scrambling sequence initialization value,
    3) Duration of a CORESET in the time domain (which may be given in symbol units),
    4) Resource block set,
    5) CCE-to-REG mapping parameter,
    6) Antenna port quasi co-location indicating quasi co-location (QCL) information of a DM-RS antenna port for receiving a PDCCH in each CORESET (from a set of antenna port quasi co-locations provided by a higher layer parameter called 'TCI-State'),
    7) Indication of presence of Transmission Configuration Indication (TCI) field for a specific DCI format transmitted by the PDCCH in the CORESET, and so on.

QCL will be described. If a characteristic of a channel through which a symbol on one antenna port is conveyed can be inferred from a characteristic of a channel through which a symbol on the other antenna port is conveyed, the two antenna ports are said to be quasi co-located (QCLed). For example, when two signals A and B are transmitted from the same transmission antenna array to which the same/similar spatial filter is applied, the two signals may go through the same/similar channel state. From a perspective of a receiver, upon receiving one of the two signals, another signal may be detected by using a channel characteristic of the received signal.

In this sense, when it is said that the signals A and B are quasi co-located (QCLed), it may mean that the signals A and B have went through a similar channel condition, and thus channel information estimated to detect the signal A is also useful to detect the signal B. Herein, the channel condition may be defined according to, for example, a Doppler shift, a Doppler spread, an average delay, a delay spread, a spatial reception parameter, or the like.

A 'TCI-State' parameter associates one or two downlink reference signals to corresponding QCL types (QCL types A, B, C, and D, see Table 4).

[Table 4]

| QCL Type | Description |
|---|---|
| QCL-TypeA | Doppler shift, Doppler spread, Average delay, Delay spread |
| QCL-TypeB | Doppler shift, Doppler spread |
| QCL-TypeC | Doppler shift, Average delay |
| QCL-TypeD | Spatial Rx parameter |

Each 'TCI-State' may include a parameter for configuring a QCL relation between one or two downlink reference signals and a DM-RS port of a PDSCH (or PDCCH) or a CSI-RS port of a CSI-RS resource.

Meanwhile, for each DL BWP configured to a UE in one serving cell, the UE may be provided with 10 (or less) search space sets. For each search space set, the UE may be provided with at least one of the following information.

1) search space set index s ($0 \leq s < 40$), 2) an association between a CORESET p and the search space set s, 3) a PDCCH monitoring periodicity and a PDCCH monitoring offset (slot unit), 4) a PDCCH monitoring pattern within a slot (e.g., indicating a first symbol of a CORSET in a slot for PDCCH monitoring), 5) the number of slots in which the search space set s exists, 6) the number of PDCCH candidates per CCE aggregation level, 7) information indicating whether the search space set s is CSS or USS.

In the NR, a CORESET#0 may be configured by a PBCH (or a UE-dedicated signaling for handover or a PSCell configuration or a BWP configuration). A search space (SS) set#0 configured by the PBCH may have monitoring offsets (e.g., a slot offset, a symbol offset) different for each associated SSB. This may be required to minimize a search space occasion to be monitored by the UE. Alternatively, this may be required to provide a beam sweeping control/data region capable of performing control/data transmission based on each beam so that communication with the UE is persistently performed in a situation where a best beam of the UE changes dynamically.

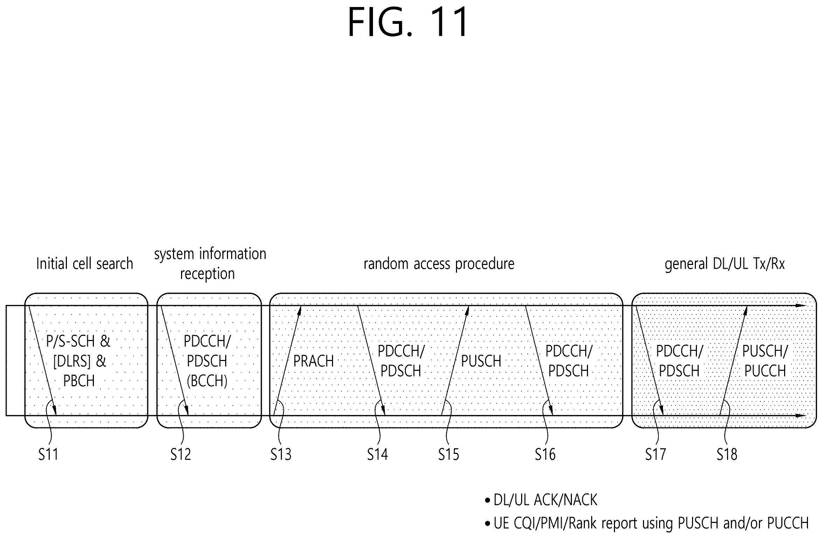

FIG. 11 illustrates physical channels and typical signal transmission.

Referring to FIG. 11, in a wireless communication system, a UE receives information from a BS through a downlink (DL), and the UE transmits information to the BS through an uplink (UL). The information transmitted/received by the BS and the UE includes data and a variety of control information, and there are various physical channels according to a type/purpose of the information transmitted/received by the BS and the UE.

The UE which is powered on again in a power-off state or which newly enters a cell performs an initial cell search operation such as adjusting synchronization with the BS or the like (S11). To this end, the UE receives a primary synchronization channel (PSCH) and a secondary synchronization channel (SSCH) from the BS to adjust synchronization with the BS, and acquire information such as a cell identity (ID) or the like. In addition, the UE may receive a physical broadcast channel (PBCH) from the BS to acquire broadcasting information in the cell. In addition, the UE may receive a downlink reference signal (DL RS) in an initial cell search step to identify a downlink channel state.

(Initial) cell search can be said to be a procedure in which the UE obtains time and frequency synchronization with a cell and detects the cell ID of the cell. Cell search may be based on the cell's primary synchronization signal and secondary synchronization signal, and PBCH DMRS.

Upon completing the initial cell search, the UE may receive a physical downlink control channel (PDCCH) and a physical downlink control channel (PDSCH) corresponding thereto to acquire more specific system information (S12).

Thereafter, the UE may perform a random access procedure to complete an access to the BS (S13 ~ S16). Specifically, the UE may transmit a preamble through a physical random access channel (PRACH) (S13), and may receive a random access response (RAR) for the preamble through a PDCCH and a PDSCH corresponding thereto (S14). Thereafter, the UE may transmit a physical uplink shared channel (PUSCH) by using scheduling information in the RAR (S15), and may perform a contention resolution procedure similarly to the PDCCH and the PDSCH corresponding thereto (this can be said to be the process of receiving a competition resolution message) (S16).

After performing the aforementioned procedure, the UE may perform PDCCH/PDSCH reception (S17) and PUSCH/physical uplink control channel (PUCCH) transmission (S18) as a typical uplink/downlink signal transmission procedure. Control information transmitted by the UE to the BS is referred to as uplink control information (UCI). The UCI includes hybrid automatic repeat and request (HARQ) acknowledgement (ACK)/negative-ACK (NACK), scheduling request (SR), channel state information (CSI), or the like. The CSI includes a channel quality indicator (CQI), a precoding matrix indicator (PMI), a rank indication (RI), or the like. In general, the UCI is transmitted through the PUCCH. However, when control information and data are to be transmitted simultaneously, the UCI may be transmitted through the PUSCH. In addition, the UE may aperiodically transmit the UCI through the PUSCH according to a request/indication of a network.

In order to enable reasonable battery consumption when bandwidth adaptation (BA) is configured, only one uplink BWP and one downlink BWP or only one downlink/uplink BWP pair for each uplink carrier may be activated at once in an active serving cell, and all other BWPs configured in the UE are deactivated. In the deactivated BWPs, the UE does not monitor the PDCCH, and does not perform transmission on the PUCCH, PRACH, and UL-SCH.

For the BA, RX and TX bandwidths of the UE are not necessarily as wide as a bandwidth of a cell, and may be adjusted. That is, it may be commanded such that a width is changed (e.g., reduced for a period of low activity for power saving), a position in a frequency domain is moved (e.g., to increase scheduling flexibility), and a subcarrier spacing is changed (e.g., to allow different services). A subset of the entire cell bandwidth of a cell is referred to as a bandwidth part (BWP), and the BA is acquired by configuring BWP(s) to the UE and by notifying the UE about a currently active BWP among configured BWPs. When the BA is configured, the UE only needs to monitor the PDCCH on one active BWP. That is, there is no need to monitor the PDCCH on the entire downlink frequency of the cell. A BWP inactive timer (independent of the aforementioned DRX inactive timer) is used to switch an active BWP to a default BWP. That is, the timer restarts when PDCCH decoding is successful, and switching to the default BWP occurs when the timer expires.

Hereinafter, an integrated access and backhaul link (IAB) will be described. Hereinafter, for convenience of description, a proposed method will be described based on a new RAT (NR) system. However, the range of the system to which the proposed method is applied is expandable to other systems such as 3GPP LTE/LTE-A systems in addition to the NR system.

One of the potential technologies aimed at enabling future cellular network deployment scenarios and applications is support for wireless backhaul and relay links, and it enables flexible and highly dense deployment of NR cells without the need to proportionally densify the transport network.

It is expected that greater bandwidth in NR compared to LTE will be available (e.g., mmWave spectrum) with the native deployment of massive MIMO or multi-beam systems, thus, occasions are created for the development and deployment of integrated access and backhaul links. This makes it easier of a dense network of self-backhauled NR cells in a more integrated manner by establishing multiple control and data channels/procedures defined to provide access or access to the UEs. Such systems are referred to as integrated access and backhaul links (IAB).

This disclosure defines the following.

-    AC (x): an access link between the node (x) and the UE(s).
-    BH (xy): a backhaul link between the node (x) and the node (y).

In this case, the node may mean a donor gNB (DgNB) or a relay node (RN). Here, the DgNB or the donor node may be a gNB that provides a function to support backhaul to IAB nodes.

When relay node 1 and relay node 2 exist, relay node 1 which is connected to relay node 2 by a backhaul link and relaying data transmitted and received to relay node 2 is called a parent node of relay node 2, and relay node 2 is called a child node of relay node 1.

Technical features described individually in one drawing in this specification may be implemented individually or simultaneously.

The following drawings were prepared to explain a specific example of the present specification. Since the names of specific devices or specific signals/messages/fields described in the drawings are provided as examples, the technical features of this specification are not limited to the specific names used in the drawings below.

<PUSCH repetitions>

PUSCH repetition types A and B were introduced in the standard specifications (e.g., NR Rel-15/16). Transmission is performed as follows depending on the PUSCH repetition type.

1) PUSCH repetition type A

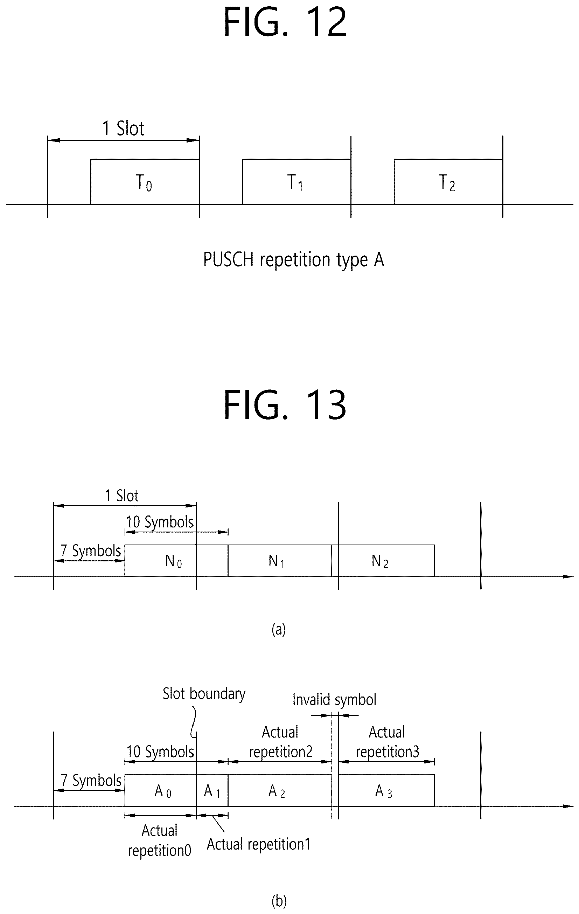

FIG. 12 is an example of PUSCH repetition type A.

Referring to FIG. 12, PUSCH repetition type A is a slot-based PUSCH repetition transmission, and repetition is performed with the same PUSCH transmission start symbol position and PUSCH transmission symbol length for each slot, as illustrated in FIG. 12. At this time, if there is an invalid symbol that cannot be used for PUSCH transmission among the symbol resources that constitute a specific PUSCH repetition, the transmission of the corresponding PUSCH repetition is dropped and not performed. For example, when a total of four PUSCH repetition transmissions of Rep0, Rep1, Rep2, and Rep3 are performed in slots N, N+1, N+2, and N+3 (one PUSCH repetition is transmitted in each slot), if the symbol resources constituting Rep1 include an invalid symbol, the transmission of Rep1 is dropped, and only the transmissions of Rep0, Rep2, and Rep3 are performed. Therefore, the actual number of repetitions performed may be less than the configured number of repetitions.

For PUSCH repetition type A, frequency hopping can be configured for the UE by higher layer parameters. One of two frequency hopping modes can be configured.

i) Frequency hopping within a slot (intra-slot frequency hopping) is applicable to single slot and multi-slot PUSCH transmission.

ii) Inter-slot frequency hopping is applicable to multi-slot PUSCH transmission.

2) PUSCH repetition type B

FIG. 13 is an example of PUSCH repetition type B.

Referring to FIG. 13, PUSCH repetition type B is repeated in units of the symbol length in which the actual PUSCH is transmitted. For example, as in (a) of FIG. 13, when PUSCH is transmitted through 10 symbols, PUSCH repetition is performed in units of 10 consecutive symbols. At this time, repetition that determines PUSCH repetition transmission time resources without considering slot boundaries, invalid symbols, etc. is called nominal repetition. (a) of FIG. 13 shows an example in which three nominal repetitions (denoted as N0, N1, and N2) are configured.

However, in the case of actual PUSCH repetition, a single PUSCH cannot be transmitted while including a slot boundary. That is, if a nominal PUSCH transmission includes a slot boundary (e.g., N0, N2 in (a) of FIG. 13), two actual repetitions are performed with the slot boundary as the boundary, as in (b) of FIG. 13. For example, a nominal repetition N0 is performed with two actual repetitions, such as A0, A1, with the slot boundary as the boundary.

Additionally, a single PUSCH transmission can only be performed using consecutive symbols. If an invalid symbol exists in the time resource where a PUSCH repetition should be transmitted, the actual repetition is formed using consecutive symbols with the invalid symbol as the boundary. For example, if symbols #0 to #9 constitute a nominal repetition and symbols #3 to #5 are invalid symbols, symbols #0 to #2 and symbols #6 to #9, excluding the invalid symbol, each constitute an actual repetition.

Invalid symbols may include the following:

i) Downlink symbol configured by semi-static TDD UL-DL configuration,
ii) an invalid symbol pattern configured by RRC (which may be configured by the invalid symbol pattern indicator),
iii) SSB symbol configured by SIB1, SSB symbol configured by 'ServngCellConfigCommon',
iv) Symbol for PDCCH for SIB1,
v) Invalid symbol for DL-UL switching configured by RRC.

If a symbol that cannot be used for PUSCH transmission (e.g., a DL symbol indicated by DCI format 2_0) is included within one actual repetition resource, the corresponding actual repetition transmission is dropped and not performed.

Now, full duplex operation will be described.

In 5G, new service types such as extended reality (XR), artificial intelligence-based service, and self-driving car are emerging. These services have characteristics that dynamically change traffic in both downlink (DL) and uplink (UL) directions, and require low latency for traffic (e.g., packets) to be transmitted. In 5G services, traffic will increase explosively to support these various new use cases.

Existing semi-static or dynamic TDD UL/DL configurations have limitations such as transmission time delay and interference between operators. The existing FDD method has limitations in terms of efficient frequency resource utilization in the DL/UL direction. Therefore, for low latency and efficient resource utilization in NR, the introduction of full duplex operation within a single carrier is being discussed.

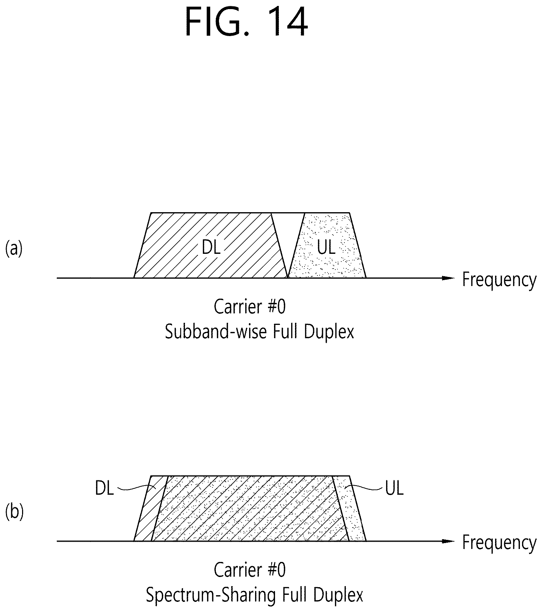

FIG. 14 shows examples of how to apply full duplex within an intra-carrier.

Referring to FIG. 14, the full duplex method includes subband-wise full duplex (hereinafter, it can be called subband full duplex or SBFD) as shown in (a) of FIG. 14 and spectrum sharing full duplex (hereinafter, it can be called SSFD) as shown in (b) of FIG. 14 may be considered.

In the case of SBFD, DL and UL are transmitted and received through different frequency resources within the same carrier (e.g., carrier #0). That is, different frequency resources are used in DL and UL for the same time resource.

In the case of SSFD, DL and UL are transmitted and received through the same or overlapped frequency resources within the same carrier (e.g., carrier #0). That is, the same or overlapping frequency resources can be used in DL and UL for the same time resource.

This full-duplex (FD) operation can also be used in combination with the existing half-duplex (HD) operation. For example, among time resources used for existing half-duplex-based TDD operation, some time resources may be used for full duplex operation. SBFD or SSFD operations can be performed on time resources that perform full duplex operations.

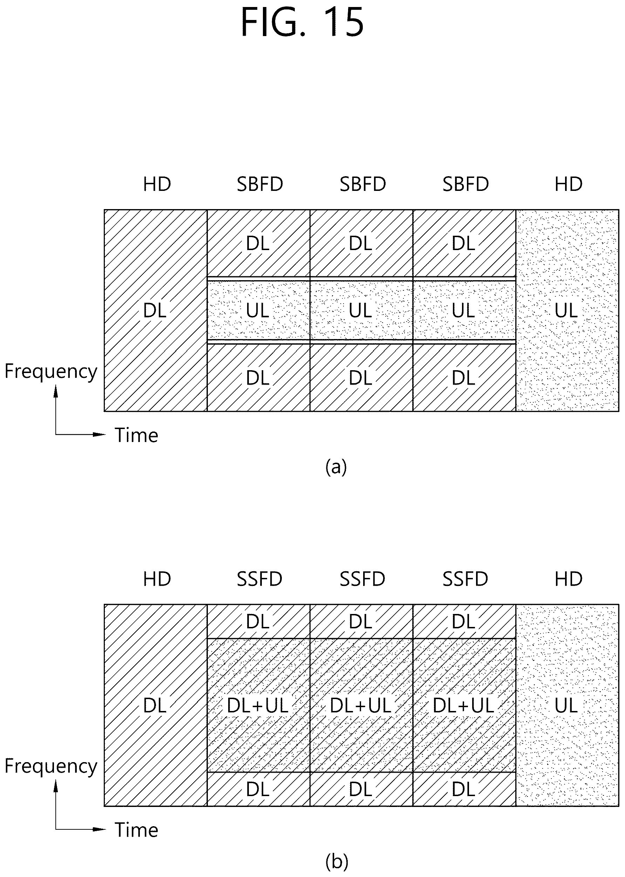

FIG. 15 shows an example in which a time resource operating in half duplex (HD) and a time resource operating in full duplex (FD) such as SBFD or SSFD exist together.

In (a) of FIG. 15, some time resources operating as SBFD are indicated as SBFD, and time resources operating as HD are indicated as HD. In (b) of FIG. 15, some time resources operating as SSFD are indicated as SSFD, and time resources operating as HD are indicated as HD. The unit of time resource may be, for example, a slot or symbol.

In time resources operating as SBFD, some frequency resources are used as DL resources, and other frequency resources are used as UL resources. Between the DL frequency resource and the UL frequency resource, there may be a guard subband that is unused and empty for both DL and UL. Guard subbands may also be referred to by other terms, such as guard frequency resources or guard subcarrier(s).

In time resources operating with SSFD, the entire frequency resource can be used for both DL and UL. Or, to reduce the impact of interference from other adjacent carriers (this may be referred to as ACI (adjacent carrier interference)), Some frequency resources at one or both ends of the carrier may not be used for DL and/or UL. That is, one or both ends of the carrier can be used as an unused guard band (guard subband) for both DL and UL. Alternatively, to reduce ACI on UL reception, one or both ends of the carrier may be used only for DL transmission.

In this disclosure, a slot resource that operate as HD is referred to as a HD slot, and a slot resource that operate as SBFD and a slot resource that operate as SSFD are referred to as a SBFD slot and a SSFD slot, respectively. The SBFD slot and the SSFD slot are also collectively referred to as FD slots.

In the present disclosure, in time resources operating as FD, among all frequency resources, frequency resources operating as DL may be referred to as a DL subband, and frequency resources operating as UL may be referred to as an UL subband, for convenience.

In the case of full duplex operation, both the base station and the UE can perform full duplex operation. That is, both the base station and the UE can simultaneously perform DL and UL transmission and reception using the same or different frequency resources in the same time resource.

Alternatively, only the base station can perform full duplex operation and the UE can perform half duplex operation. The base station can simultaneously perform transmission and reception of DL and UL using the same or different frequency resources in the same time resource, but the UE only performs DL reception or UL transmission in a specific time resource. In this case, the base station performs full duplex operation by performing DL transmission and UL reception with different UEs at the same time.

The content of the present disclosure is described assuming that the base station performs/supports a full duplex operation, but the UE performs/supports a half duplex operation. However, the content of the present disclosure can be applied even when both the base station and the UE perform/support full duplex operation.

Based on this discussion, the present disclosure proposes a PUSCH transmission method of a UE when one PUSCH transmission includes both SBFD symbols and non-SBFD symbols during intra-carrier full duplex operation.

In the following, the term network may be interpreted as gNB or CU/DU. Additionally, the term UE may be interpreted as MT (mobile terminal, mobile termination) of an IAB node or NCR-MT (MT of a network-controlled repeater).

<A. Characteristics of DL/UL time/frequency resources for SBFD and SSFD operation>

A cell (base station) can perform both DL transmission and UL reception in the same time resource in an FD scheme such as SBFD or SSFD. For example, the base station may perform HD operation in a first time resource and FD operation in a second time resource (which may be a time resource other than the first time resource).

The first time resource performing HD operation performs DL operation or UL operation across the frequency resources that comprise the entire system bandwidth. Within the first time resource performing the HD operation, the network performs the DL operation through the 1-1 time resource and the UL operation through the 1-2 time resource. At this time, the 1-1 time resource and the 1-2 time resource do not overlap with each other.

In the second time resource performing the FD operation, the network performs DL operations through all or part of the frequency resources (first frequency resources) among the frequency resources that constitute the system BW of the cell, and performs UL operations through all or part of the frequency resources (second frequency resources).

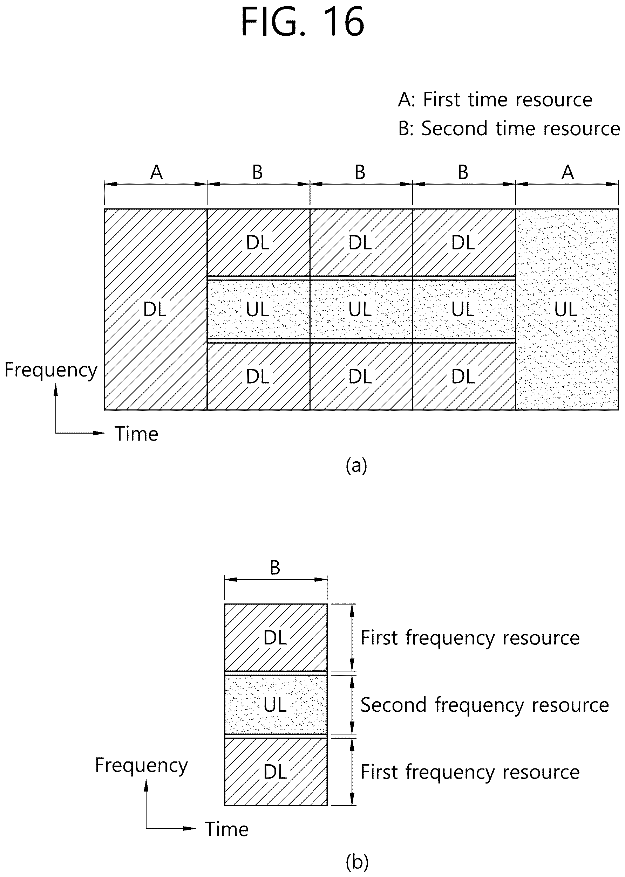

FIG. 16 shows examples of a first time resource, a second time resource, a first frequency resource, and a second frequency resource.

Referring to (a) of FIG. 16, in the first time resource (represented by A), the device is operated in HD. In the second time resource (represented by B), for example, the device may be operated as SBFD. In the first time resource, the resource indicated by DL corresponds to the above-described 1-1 time resource, and the resource indicated by UL corresponds to the above-described 1-2 time resource.

Referring to (b) of FIG. 16, in the second time resource, the frequency resource operating as DL corresponds to the above-described first frequency resource, and the frequency resource operating as UL corresponds to the above-described second frequency resource.

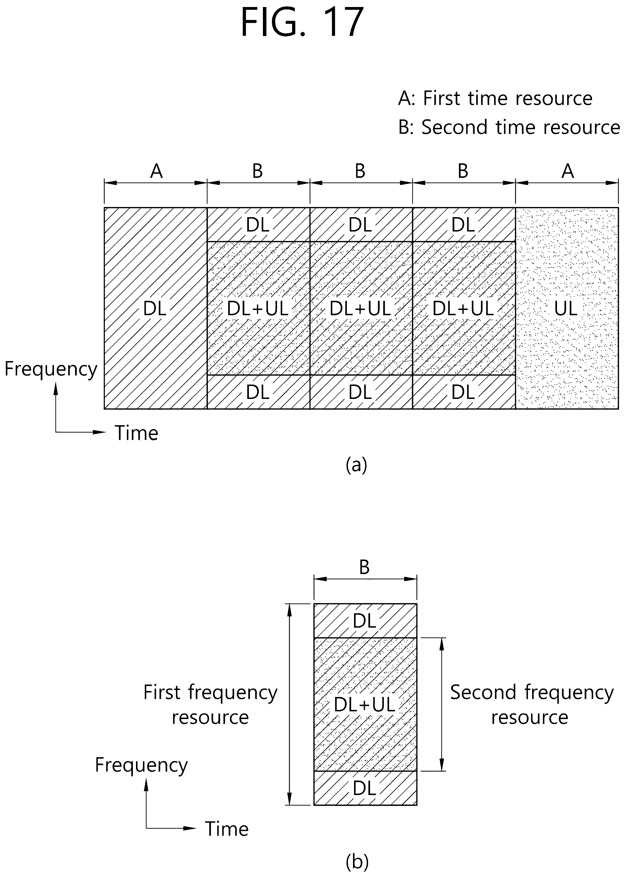

FIG. 17 shows another example of a first time resource, a second time resource, a first frequency resource, and a second frequency resource.

Referring to (a) of FIG. 17, in the first time resource (denoted by A), the device operates as a half-duplex. In the second time resource (labelled B), the device may operate, for example, as an SSFD. In the first time resource, the resource denoted DL corresponds to the first time resource described above, and the resource denoted UL corresponds to the second time resource described above.

Referring to (b) of FIG. 17, in the second time resource, the frequency resources operating as DL and DL+UL correspond to the first frequency resource described above, and the frequency resources operating as DL+UL correspond to the second frequency resource described above.

The first frequency resource and/or the second frequency resource may have all or some of the following characteristics.

1) When performing SBFD operation, the first frequency resource and the second frequency resource do not overlap with each other. This is to ensure that DL and UL operations are performed through different frequency resources. At this time, there may be frequency resources that do not correspond to both the first and second frequency resources, and these frequency resources are called guard subbands or guard frequency resources. These guard frequency resources may be needed to reduce interference from DL transmission on UL reception. The guard frequency resource may be located between the first frequency resource and the second frequency resource.

2) When performing SSFD operation, the first frequency resource and the second frequency resource may overlap. At this time, there may be frequency resources that do not correspond to both the first and second frequency resources, and these frequency resources are called guard subbands or guard frequency resources. These guard frequency resources may be needed to reduce interference from DL transmission on adjacent carriers to UL reception and/or to reduce interference from DL transmission on UL reception on adjacent carriers.

3) When performing an SBFD operation, the second frequency resource may be composed of contiguous frequency resources, and the first frequency resource may be composed of non-contiguous frequency resources. At this time, the first frequency resource may be composed of a plurality of non-contiguous sets (for example, two), and each set may be composed of contiguous frequency resources. This is to reduce interference from DL transmission on adjacent carriers to UL resources by placing the second frequency resource used for UL at the center of the frequency resources constituting the cell. Conversely, the first frequency resource may be composed of contiguous frequency resources, and the second frequency resource may be composed of non-contiguous frequency resources. At this time, the second frequency resource may be composed of multiple (e.g., two) non-contiguous sets and each set may be composed of contiguous frequency resources. This is to reduce interference from DL transmission on UL resources in adjacent carriers by placing the second frequency resource used for DL at the center of the frequency resources constituting the cell.

4) When performing SSFD operation, the second frequency resource may be composed of some frequency resources of the first frequency resource. At this time, the second frequency resource may be configured to have fewer X physical resource blocks (PRBs) on one or both edges of a carrier than the first frequency resource. This is to reduce interference from DL transmission on adjacent carriers to UL reception.

The network determines the 'first time resource' and 'second time resource', and the 'first frequency resource' and 'second frequency resource' as described above, and provides all or part of the corresponding information to the UE.

For the FD (SBFD and/or SSFD) operation of the cell, the UE may determine information about the time resources (hereinafter referred to as SBFD symbols) that operate as SBFD (and/or SSFD). For this purpose, information about the SBFD symbol may be set to the UE from the network.

When a specific time resource is configured as a time resource operating in SBFD (SBFD symbol), both DL and UL resources may exist in that time resource. In this case, if there is no UL signal for the base station to receive in that time resource, the base station may only perform DL transmissions. In SBFD resources, DL transmission is only within the DL subband. Therefore, even if there is no UL signal transmitted in the UL subband, DL transmission may only be performed within the DL subband.

In this case, if the base station has no UL transmissions to receive, even if the specific time resource is a resource determined to be SBFD symbol, it may consider performing DL transmissions outside the DL subband as well as in the DL subband to improve DL throughput. That is, it may consider performing DL transmissions in the full band.

That is, in resources determined to be SBFD symbol, it may consider a fallback to TDD operation where DL or UL operation is performed over the full band, rather than SBFD operation over DL/UL subbands.

In resources not determined as the SBFD symbol, the UE can perform TDD operation (half-duplex operation) like a conventional UE. That is, it can perform only DL or UL operation using the entire frequency resources of the cell.

A UE can receive SBFD symbol information from the network. Based on this, it can determine whether a specific symbol is an SBFD symbol or a non-SBFD symbol.

i) If the UE determines that a specific symbol is a non-SBFD symbol, it can perform a legacy operation on the symbol (or determines that a legacy operation is to be performed).

ii) If the UE determines that a specific symbol is an SBFD symbol, it determines that the symbol is a symbol that can perform SBFD operation from the cell perspective.

The UE may not receive configuration information for SBFD symbols from the network. In this case, i) the UE may determine all symbols as non-SBFD symbols. Therefore, the UE can operate as in legacy TDD for all symbols.

Or ii) if the UE does not receive configuration information for SBFD symbols from the network, the UE may determine all symbols as SBFD symbols.

If the UE determines that a specific symbol is an SBFD symbol, i) in general, the UE can perform DL reception within the DL subband and UL transmission within the UL subband in the time resource where the cell is determined to operate in SBFD. ii) Additionally, the base station can consider performing only DL transmission or UL reception in the time resource where the cell is determined to operate in SBFD, or performing DL transmission or UL reception over the entire band (capable of receiving DL or UL scheduling) as needed.

A UE may be configured with information about SBFD symbols/non-SBFD symbols (which may be referred to as SBFD symbol/non-SBFD symbol information) from the network through semi-static signaling. Through this, the UE can determine whether a specific symbol is used as an SBFD symbol or a non-SBFD symbol.

Alternatively, the UE may determine the location of a symbol used as an SBFD symbol and/or a non-SBFD symbol. In this case, the UE may determine a symbol for which SBFD symbol/non-SBFD symbol information has not been set as a non-SBFD symbol. Alternatively, the UE may determine a symbol for which SBFD symbol/non-SBFD symbol information has not been set as an SBFD symbol.

In addition, the UE may receive SBFD symbol/non-SBFD symbol information through dynamic signaling from the network. This indication may be indicated through UE-specific DCI, for example, through DL grant/UL grant. Alternatively, this indication may be indicated through UE-group specific DCI, such as DCI format 2_0.

The SBFD symbol/non-SBFD symbol information may specifically mean the following.

i) Information on whether a particular symbol resource is used as an SBFD symbol or a non-SBFD symbol.
ii) Information on whether a resource configured to operate as an SBFD symbol is switched to a non-SBFD symbol.
iii) Information on whether DL and/or UL transmissions in a particular symbol operate using the entire frequency resource (wideband) or only within a subband in the symbol.

The dynamic indication may only be provided or applied to symbols that are determined to operate as SBFD symbols.

The UE can determine the UL subband and DL subband based on the network configurations.

i) The UE receives information about UL subbands and DL subbands from the network, and can determine frequency resources constituting the UL subbands and DL subbands from this.
ii) Alternatively, the UE may receive only information about the UL subband from the network and determine the frequency resources constituting the UL subband from this. In this case, within the frequency resources constituting the system BW, the remaining frequency resources, excluding the frequency resources set/determined as UL subbands, may be determined as DL subbands. Additionally, if the UE is configured with frequency resources that constitute a guard subband, the remaining frequency resources, excluding the frequency resources configured/determined as UL subbands and guard subbands, within the frequency resources that constitute the system BW, can be determined as DL subbands.
iii) Alternatively, the UE may receive only information about the DL subband from the network and determine the frequency resources constituting the UL subband from this. In this case, within the frequency resources constituting the system BW, the remaining frequency resources, excluding the frequency resources set/determined as DL subbands, may be determined as UL subbands. Additionally, if the UE is configured with frequency resources that constitute a guard subband, the remaining frequency resources, excluding the frequency resources configured/determined as DL subbands and guard subbands, within the frequency resources that constitute the system BW, can be determined as UL subbands.

In the present disclosure, the time resource operating in SBFD or the SBFD symbol may refer to the aforementioned "second time resource." In addition, the time resource operating in TDD, the time resource operating in HD, the TDD symbol, or the HD symbol in the present disclosure may refer to the aforementioned "first time resource."

The DL subband mentioned in this disclosure may refer to the aforementioned "first frequency resource." Furthermore, the UL subband mentioned in this disclosure may refer to the aforementioned "second frequency resource."

<B. PUSCH/PDSCH transmission and reception resources considering SBFD operation>

When a UE is scheduled for PUSCH transmission (DG (dynamic grant)-PUSCH, CG (configured grant)-PUSCH, TBoMS (TB processing over multiple slots), etc.) through RRC configuration and/or DCI signaling from the network, some or all of the frequency resources allocated for transmission of the corresponding PUSCH may not be included in the UL subband.

For example, the network expects that the UE will receive the CG-PUSCH using non-SBFD symbols and sets the reception frequency resource of the CG-PUSCH to the UE, but a transmission symbol of a specific CG-PUSCH may include an SBFD symbol.

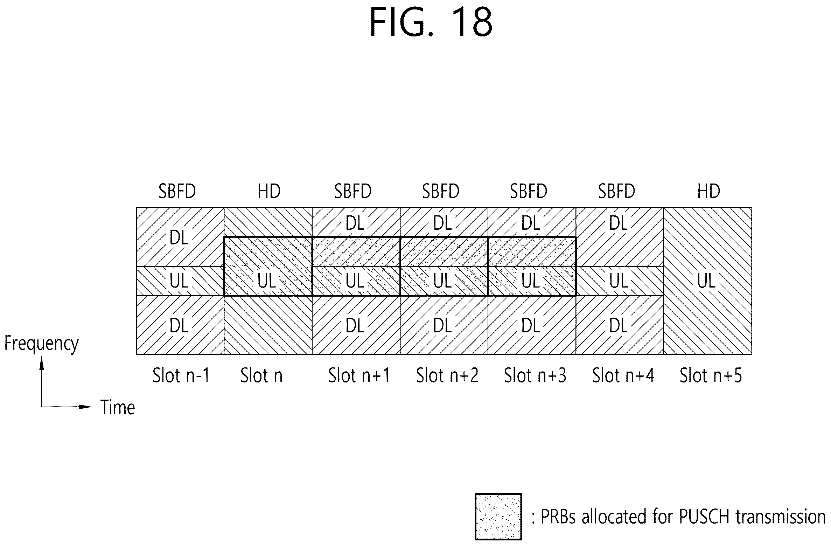

FIG. 18 illustrates frequency resources allocated for PUSCH transmission.

Referring to FIG. 18, when a base station schedules PUSCH repetition or TBoMS transmission to a UE through multiple slot resources, an SBFD symbol may be included in the transmission symbols of PUSCH and TBoMS through the multiple slots. For example, frequency resources (PRBs) for PUSCH transmission are allocated from slot n to slot n+3, where slot n may be composed of non-SBFD symbols and slots n+1 to n+3 may be composed of SBFD symbols.

In this way, the symbol resources for which a UE transmits a specific PUSCH may include an SBFD symbol. In this case, all or part of the frequency resources allocated to the UE for PUSCH transmission may not be included in the UL subband, as seen in slots n+1 to n+3.

When a UE performs a specific PUSCH transmission, if the symbol resource for transmitting the PUSCH includes an SBFD symbol, the UE may perform the PUSCH transmission using all or part of the frequency resources within the UL subband among the frequency resources allocated for the PUSCH transmission.

More specifically, PUSCH transmission frequency resources can be determined as follows, and PUSCH transmission can be performed using the corresponding frequency resources.

i) Among the PRB resources allocated to transmit PUSCH, only PRB resources included in the UL subband can be determined as PRB resources transmitting PUSCH.

ii) Among the RBG resources allocated to transmit PUSCH, only RBG resources in which all PRBs constituting the RBG are included in the UL subband can be determined as RBG resources for transmitting PUSCH.

At this time, the SBFD symbol may mean a symbol in which the UE determines that the cell operates in SBFD based only on the semi-static signaling from the network, and the non-SBFD symbol may mean a symbol in which the UE determines that the cell operates in non-SBFD based only on the semi-static signaling from the network.

Alternatively, the SBFD symbol may mean a symbol determined by the UE to operate as SBFD based on static signaling and dynamic signaling from the network, or a symbol determined by the UE to perform DL/UL operation through resources within a subband. A non-SBFD symbol may mean a symbol that the UE determines to operate non-SBFD based on static signaling and dynamic signaling from the network, or a symbol that the UE determines to perform DL/UL operation over a wideband (i.e., the entire frequency resource within the symbol).

In this way, when a UE performs PUSCH transmission using all or part of the frequency resources within the UL subband among the frequency resources allocated for PUSCH transmission, the actual PUSCH transmission may be performed using only a smaller number of PRB resources compared to the PRB resources allocated for PUSCH transmission.

Meanwhile, the transport block (TB) size (TBS) for PUSCH transmission can be determined based on the number of allocated PRBs (e.g., through the FDRA field of the UL grant indicated through DCI).

In case of i) PUSCH scheduled by random access response (RAR) UL grant, ii) PUSCH scheduled by fallback RAR UL grant, iii) PUSCH scheduled by DCI format 0_0 with CRC scrambled by C-RNTI, MCS-C-RNTI, TC-RNTI, CS-RNTI, iv) PUSCH scheduled by DCI format 0_1 or DCI format 0_2 with CRC scrambled by C-RNTI, MCS-C-RNTI, CS-RNTI, v) CG-PUSCH or message A PUSCH transmission, if $I_{MCS}$ is 0 or greater and 27 or less ($0 \leq I_{MCS} \leq 27$) and transform precoding is enabled, the UE first determines the number of resource elements (REs) in the slot ($N_{RE}$, this can be said to be the total number of REs allocated for PUSCH) to determine the TBS, as follows.

To this end, the UE first determines the number of REs ($N'_{RE}$) allocated to PUSCH within one PRB as follows.

[Equation 1]

$$N'_{RE} = N_{sc}^{RB} \cdot N_{symb}^{sh} - N_{DMRS}^{PRB} - N_{oh}^{PRB}$$

In Equation 1, $N_{sc}^{RB}$ = 12, which is the number of subcarriers in the frequency domain of a physical resource block (PRB).

$N_{symb}^{sh}$ is the number of symbols L of the PUSCH allocation.

$N_{DMRS}^{PRB}$ is the number of REs for DM-RS per PRB in the allocated duration including the overhead of the DM-RS CDM groups without data.

$N_{oh}^{PRB}$ is an overhead configured by the higher layer parameter xOverhead of PUSCH-ServingCellConfig. If $N_{oh}^{PRB}$ is not configured, $N_{oh}^{PRB}$ is considered 0.

The UE determines the total number of REs ($N_{RE}$) allocated to PUSCH as follows.

For TBoMS, $N_{RE}$ = N * min (156, $N'_{RE}$) · $n_{PRB}$, where $n_{PRB}$ is the total number of PRBs allocated to the UE and N is the number of slots used for TBS determination as indicated by 'numberOfSlotsTBoMS'. Otherwise, $N_{RE}$ = min (156, $N'_{RE}$) · $n_{PRB}$.

For example, the UE may obtain an unquantized intermediate variable ($N_{info}$) based on the $N_{RE}$, the modulation order ($Q_m$) determined based on modulation and codign scheme field ($I_{MCS}$), target code rate (R), number of layers (v), etc., and then determine the TBS based on the quantized intermediate number of information bits ($N'_{info}$) obtained according to the value of $N_{info}$.

For example, $N_{info}$ can be obtained by the following equation.

[Equation 1-1]

$$N_{info} = N_{RE} \cdot R \cdot Q_m \cdot v$$

If $N_{info}$ is less than or equal to a certain value (e.g., 3824), the quantized intermediate number of information bits $N'_{info}$ can be obtained as follows.

[Equation 1-2]

$$N'_{info} = max\left(24, 2^n \cdot \left\lceil \frac{N_{info}}{2^n} \right\rceil\right) \text{ where } n = max(3, \lfloor log_2(N_{info}) \rfloor - 6)$$

After that, find the closest TBS that is not less than $N'_{info}$ in the table below.

[Table 5]

| Index | TBS | Index | TBS | Index | TBS | Index | TBS |
|---|---|---|---|---|---|---|---|
| 1 | 24 | 31 | 336 | 61 | 1288 | 91 | 3624 |
| 2 | 32 | 32 | 352 | 62 | 1320 | 92 | 3752 |
| 3 | 40 | 33 | 368 | 63 | 1352 | 93 | 3824 |
| 4 | 48 | 34 | 384 | 64 | 1416 | | |
| 5 | 56 | 35 | 408 | 65 | 1480 | | |
| 6 | 64 | 36 | 432 | 66 | 1544 | | |
| 7 | 72 | 37 | 456 | 67 | 1608 | | |
| 8 | 80 | 38 | 480 | 68 | 1672 | | |
| 9 | 88 | 39 | 504 | 69 | 1736 | | |
| 10 | 96 | 40 | 528 | 70 | 1800 | | |
| 11 | 104 | 41 | 552 | 71 | 1864 | | |
| 12 | 112 | 42 | 576 | 72 | 1928 | | |
| 13 | 120 | 43 | 608 | 73 | 2024 | | |
| 14 | 128 | 44 | 640 | 74 | 2088 | | |
| 15 | 136 | 45 | 672 | 75 | 2152 | | |
| 16 | 144 | 46 | 704 | 76 | 2216 | | |
| 17 | 152 | 47 | 736 | 77 | 2280 | | |
| 18 | 160 | 48 | 768 | 78 | 2408 | | |
| 19 | 168 | 49 | 808 | 79 | 2472 | | |
| 20 | 176 | 50 | 848 | 80 | 2536 | | |
| 21 | 184 | 51 | 888 | 81 | 2600 | | |
| 22 | 192 | 52 | 928 | 82 | 2664 | | |
| 23 | 208 | 53 | 984 | 83 | 2728 | | |
| 24 | 224 | 54 | 1032 | 84 | 2792 | | |
| 25 | 240 | 55 | 1064 | 85 | 2856 | | |
| 26 | 256 | 56 | 1128 | 86 | 2976 | | |

(continued)

| Index | TBS | Index | TBS | Index | TBS | Index | TBS |
|-------|-----|-------|-----|-------|-----|-------|-----|
| 27 | 272 | 57 | 1160 | 87 | 3104 | | |
| 28 | 288 | 58 | 1192 | 88 | 3240 | | |
| 29 | 304 | 59 | 1224 | 89 | 3368 | | |
| 30 | 320 | 60 | 1256 | 90 | 3496 | | |

If $N_{info}$ is greater than a certain value (e.g., 3824), the quantized intermediate number of information bits $N'_{info}$ can be obtained as follows.

[Equation 1-3]

$$N'_{info} = max\left(3840, 2^n \times round\ \left(\frac{N_{info}-24}{2^n}\right)\right) \text{ where } n = \lfloor log_2(N_{info} - 24)\rfloor - 5$$

At this time, TBS can be determined as shown in Table 6 below according to the target code rate R and the value of $N'_{info}$.

[Table 6]

if $R \leq 1/4$

$$TBS = 8\cdot C\cdot \left\lceil\frac{N'_{info}+24}{8\cdot C}\right\rceil - 24,$$

where $C = \left\lceil\frac{N'_{info}+24}{3816}\right\rceil$   3816

else

if $N'_{info} > 8424$

$$TBS = 8\cdot C\cdot \left\lceil\frac{N'_{info}+24}{8\cdot C}\right\rceil - 24,$$

where $C = \left\lceil\frac{N'_{info}+24}{8424}\right\rceil$   8424

else

$$TBS = 8\cdot \left\lceil\frac{N'_{info} + 24}{8}\right\rceil - 24$$

end if

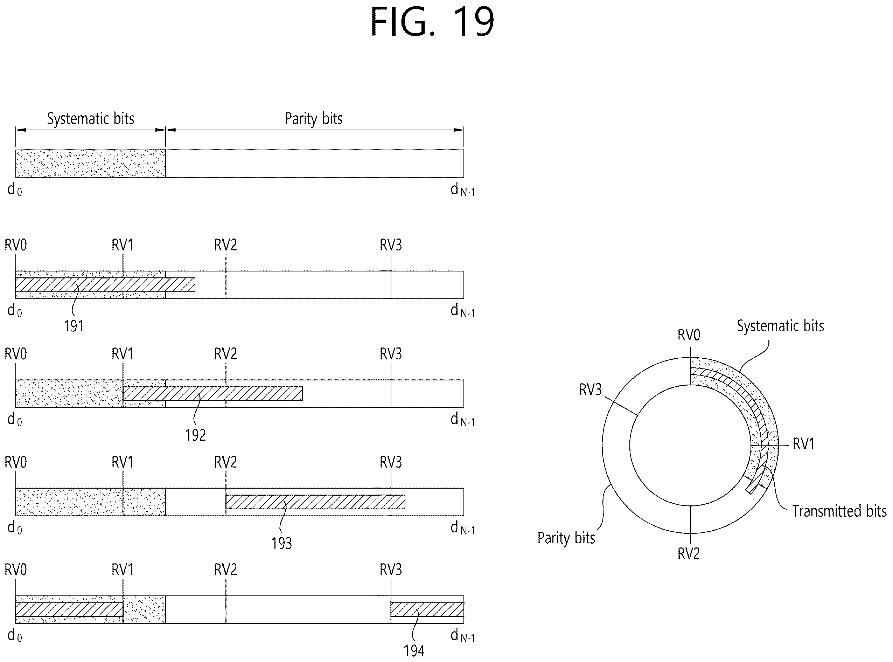

FIG. 19 illustrates bits transmitted on each PUSCH in PUSCH repeated transmission.

Referring to FIG. 19, the "transmitted bits" (which may also be called rate-matched bits) transmitted via each PUSCH resource are determined based on the RV (redundancy version) value applied to each PUSCH transmission, from among the encoded bits.

For example, as illustrated in FIG. 19, encoded bits composed of systematic bits and parity bits may be transmitted, some (191) through the first PUSCH to which RV0 is applied, some (192) through the second PUSCH to which RV1 is applied, some (193) through the third PUSCH to which RV2 is applied, and some (194) through the fourth PUSCH to which RV3 is applied.

At this time, the amount of 'transmitted bits' of each PUSCH is determined according to the number of PRBs used for each PUSCH transmission.

Since the TB size is determined based on the number of allocated PRBs as before, if an SBFD symbol is included among the symbol resources transmitting the PUSCH, the actual PUSCH transmission may be performed using only a smaller number of PRB resources than the PRB resources allocated for PUSCH transmission. In this case, a smaller number of "transmitted bits" (rate-matched bits) are transmitted via the PUSCH compared to when the PUSCH is transmitted using non-SBFD symbols.

Therefore, even if PUSCH corresponding to various RV values is transmitted through repetition and retransmission of PUSCH, encoded bits that are not transmitted may occur.

If some of the rate-matched bits corresponding to RV0 are not transmitted, these bits may be systematic bits, which may further impact the reception performance of PUSCH.

To solve these problems, it is necessary to improve the method for determining TB size by taking into account the reduction in the number of PRBs transmitted in SBFD slots.

In consideration of this, the present disclosure describes a method for determining the TB (transport block) size (TBS) of a PUSCH/PDSCH transmitted and received by a UE by considering the SBFD symbol during intra-carrier full duplex operation.

As in the case of the PUSCH example, when a UE performs reception of a specific PDSCH, if the symbol resource transmitting the PDSCH includes an SBFD symbol, the UE may perform PDSCH reception using all or part of the frequency resources within the DL subband among the frequency resources allocated for PDSCH reception.

The present disclosure assumes SBFD operation, where a cell performs DL and UL simultaneously using different frequency resources (subbands) in the same time resource. However, the contents of the present disclosure can also be applied to a cell performing SSFD operation.

Although the present disclosure assumes transmission of PUSCH (including TBoMS), the present disclosure can be equally applied to reception of PDSCH. In this case, the PUSCH and UL subbands can be interpreted as being replaced with PDSCH and DL subbands, respectively.

As described above, to determine the size of TB transmitted via PUSCH, the UE determines the value of $N_{RE}$ as follows.

For TBoMS, $N_{RE}=N*min(156, N'_{RE}) \cdot n_{PRB}$, where $n_{PRB}$ is the total number of PRBs allocated to the UE and N is the number of slots used for TBS determination indicated by 'numberOfSlotsTBoMS'.

In other cases, $N_{RE} = min(156, N'_{RE}) \cdot n_{PRB}$.

At this time, $n_{PRB}$ may be equal to the number of PRBs allocated to the UE in the FDRA field for PUSCH transmission.

Meanwhile, if the time resource for transmitting a PUSCH includes an SBFD symbol, the UE can transmit the PUSCH using only PRB resources within the UL subband. In this case, the UE can perform PUSCH transmission using only a smaller number of PRB resources compared to the number of PRBs allocated to the UE.

Alternatively, the number of PRBs used (or allocated) for PUSCH transmission using non-SBFD symbols may be different from the number of PRBs used (or allocated) for PUSCH transmission using symbols including SBFD symbols. That is, the number of PRBs used for PUSCH transmission may vary depending on the symbol type (SBFD symbol or non-SBFD symbol) of the symbol on which the PUSCH is transmitted.

For example, when the number of PRBs allocated to a UE is $n_{PRB}$, the number of PRBs actually used by the UE to transmit a PUSCH in an SBFD resource may be $n'_{PRB}$. Alternatively, when the number of PRBs used (or allocated) for PUSCH transmission using non-SBFD symbols is $n_{PRB}$, the number of PRBs used (or allocated) for PUSCH transmission using symbols including an SBFD symbol may be $n'_{PRB}$. In this case, $n'_{PRB}$ may be equal to or less than $n_{PRB}$.

At this time, the value of $n_{PRB}$ can be specifically as follows.

    i) Number of PRBs allocated for PUSCH transmission.
    ii) The number of PRBs allocated to be applied to PUSCH transmitted using non-SBFD symbols.
    iii) The number of PRBs used by the UE for PUSCH transmission in a non-SBFD symbol.

At this time, the value of $n'_{PRB}$ can be specifically as follows.

    i) The number of PRBs included in the UL subband among the PRBs allocated for PUSCH transmission.
    ii) Among the RBGs allocated for PUSCH transmission, when the number of RBGs in which all PRBs constituting the RBGs are included in the UL subband is A, the number of PRBs constituting the A RBGs.
    iii) The number of PRBs used by the UE for PUSCH transmission in the SBFD symbol.

5.1. Method of determining the TB size (TBS) of PUSCH transmission

Below, it is described methods for calculating the $N_{RE}$ value for determining the TB size of a PUSCH transmission by a UE. The specific process for determining the TBS can be referred to, for example, Equations 1 through 1-3, Tables 5 and 6 described above. In this case, the $N_{RE}$ value can be obtained using at least one of the following methods.

Method 1. The UE can determine the TB size of the PUSCH based on the number of PRBs used for PUSCH transmission in the SBFD symbol.

To determine the TB size of PUSCH transmission, the UE can determine the value of $N_{RE}$ as follows.

[Equation 2]

$$N_{RE} = min(156, N'_{RE}) \cdot n_{PRB} \cdot \alpha$$

In the above equation 2, the value of $\alpha$ (scaling factor) can be a positive number equal to or less than 1. More specifically, the value of $\alpha$ can be determined as follows.

Alt a. $\alpha$ may be equal to the ratio of the number of PRBs actually used for PUSCH transmission in an SBFD symbol to the number of PRBs allocated for PUSCH transmission. Alternatively, $\alpha$ may be equal to the ratio of the number of PRBs used for PUSCH transmission in an SBFD symbol to the number of PRBs used for PUSCH transmission in a non-SBFD symbol. That is, $\alpha$ may be equal to $n'_{PRB}/n_{PRB}$.

Alt b. $\alpha$ may be a value configured to the UE from the network. This value may be set through radio resource control (RRC), media access control-control element (MAC-CE), or downlink control information (DCI) signaling.

Method 2. The UE can determine the TB size of the PUSCH based on the average number of PRBs used for PUSCH transmission.

To determine the TB size of PUSCH transmission, the UE can determine the value of $N_{RE}$ as follows.

[Equation 3]

$$N_{RE} = \frac{K_1}{K} \cdot min(156, N'_{RE}) \cdot n_{PRB} + \frac{K_2}{K} \cdot min(156, N'_{RE}) \cdot n_{PRB} \cdot \alpha$$

In Equation 3, the value of $\alpha$ can be a positive number less than or equal to 1. More specifically, the value of $\alpha$ can be determined as follows.

Alt a. $\alpha$ may be equal to the ratio of the number of PRBs actually used for PUSCH transmission in an SBFD symbol to the number of PRBs allocated for PUSCH transmission. Alternatively, $\alpha$ may be equal to the ratio of the number of PRBs used for PUSCH transmission in an SBFD symbol to the number of PRBs used for PUSCH transmission in a non-SBFD symbol. That is, $\alpha$ may be equal to $n'_{PRB}/n_{PRB}$.

Alt b. $\alpha$ may be a value configured to the UE from the network. This value may be set via RRC, MAC-CE, DCI signaling, etc.

The value of K in Equation 3 may mean the number of repetitions applied to PUSCH transmission.

The value of $K_2$ in Equation 3 can be determined by one of the following methods.

i) Among K PUSCH transmissions, it means the number of PUSCH transmissions in which the symbols constituting the PUSCH transmission include at least one SBFD symbol. Or, among K PUSCH transmissions, it means the number of PUSCH transmissions in which all symbols constituting the PUSCH transmission are composed of SBFD symbols.
ii) It means the number of PUSCH transmissions transmitted using PRBs less than the number of allocated PRBs $n_{PRB}$ among K PUSCH transmissions.
iii) It means the number of PUSCH transmissions transmitted using $n'_{PRB}$ PRBs among K PUSCH transmissions.
iv) It means $K - K_1$.

The value of $K_1$ in Equation 3 can be determined by one of the following methods.

i) Among K PUSCH transmissions, it means the number of PUSCH transmissions in which the symbols constituting the PUSCH transmission include at least one non-SBFD symbol. Or, among K PUSCH transmissions, it means the number of PUSCH transmissions in which all symbols constituting the PUSCH transmission are composed of non-SBFD symbols.
ii) It means the number of PUSCH transmissions transmitted using all of the allocated PRBs $n_{PRB}$ among K PUSCH transmissions.
iii) It means the number of PUSCH transmissions transmitted using $n_{PRB}$ PRBs among K PUSCH transmissions.
iv) It means $K - K_2$.

The above equation 3 can also be transformed into the following equation 3-1.

[Equation 3-1]

$$N_{RE} = \left(\frac{K_1}{K} + \alpha \cdot \frac{K_2}{K}\right) \cdot min(156, N'_{RE}) \cdot n_{PRB}$$

In Equation 3-1, $(K_1/K + \alpha K_2/K)$ can also be replaced by a single scaling factor $\beta$.

Then, the equation 3 can be expressed as the following equation 3-2.

[Equation 3-2]

$$N_{RE} = \beta \cdot \min(156, N'_{RE}) \cdot n_{PRB}$$

That is, Equation 3 can be expressed in the same form as Equation 2, as in Equation 3-2, but at this time, the scaling factor β and the scaling factor α may have different physical meanings/values, etc. For example, α is a scaling factor to indicate how much smaller the number of frequency-domain resources (PRBs) used for PUSCH transmission in SBFD resources is compared to the number of frequency-domain resources used for PUSCH transmission in non-SBFD resources, such as the ratio of the number of PRBs used for PUSCH transmission in an SBFD symbol (or an FD slot) to the number of PRBs used for PUSCH transmission in a non-SBFD symbol (or a HD slot). On the other hand, β is a scaling factor to reflect the average number of frequency domain resources (PRBs) used for PUSCH transmission when PUSCH transmission is performed in time resources including HD slots and FD slots.

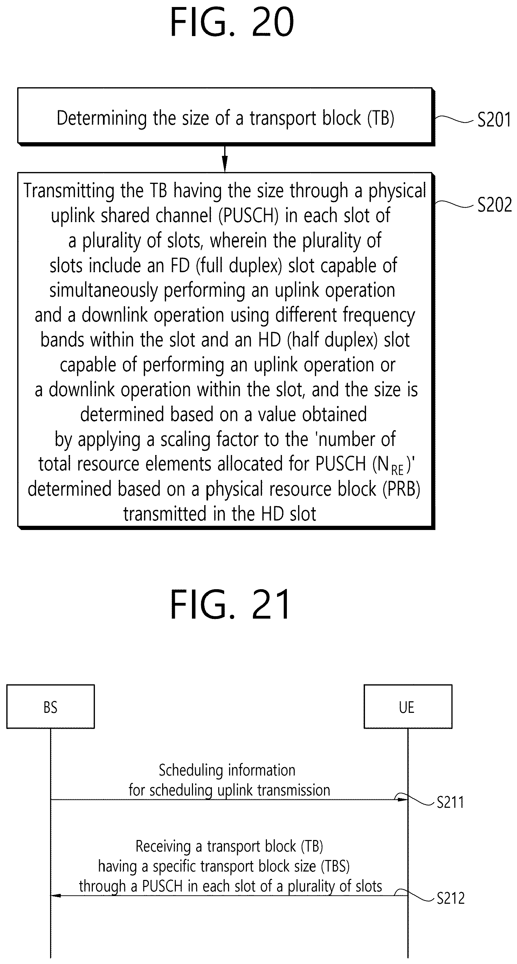

FIG. 20 illustrates an operation method of a UE in a wireless communication system.

Referring to FIG. 20, the UE determines the size of a transport block (TB) (S201).

The UE transmits the TB having the size through a physical uplink shared channel (PUSCH) in each slot of a plurality of slots, wherein the plurality of slots include an FD (full duplex) slot capable of simultaneously performing an uplink operation and a downlink operation using different frequency bands within the slot and an HD (half duplex) slot capable of performing an uplink operation or a downlink operation within the slot, and the size is determined based on a value obtained by applying a scaling factor to the 'number of total resource elements allocated for PUSCH ($N_{RE}$)' determined based on a physical resource block (PRB) transmitted in the HD slot (S202).

The scaling factor may be a ratio of the number of PRBs used for transmission of the physical uplink shared channel in the FD symbol included in the FD slot to the number of PRBs allocated for transmission of the physical uplink shared channel (PUSCH).

Specifically, the scaling factor may be (the number of PRBs used for transmission of the physical uplink shared channel in the FD symbol included in the FD slot)/(the number of PRBs allocated for transmission of the physical uplink shared channel (PUSCH)).

In some embodiments, the scaling factor may be a ratio of the number of PRBs used for transmission of the physical uplink shared channel in the FD symbol included in the FD slot to the number of PRBs allocated for transmission of the physical uplink shared channel in the HD symbol included in the HD slot.

Specifically, the scaling factor may be (the number of PRBs used for transmission of a physical uplink shared channel in an FD symbol included in an FD slot)/(the number of PRBs allocated for transmission of a physical uplink shared channel in an HD symbol included in an HD slot).

According to an embodiment, the scaling factor may be a value configured from a network, and may be configured through at least one of a radio resource control (RRC) message, a media access control-control element (MAC-CE), and downlink control information (DCI).

The specific method for obtaining the scaling factor is described in detail in Method 1 above.

In some embodiments, the scaling factor may be determined based on the average number of PRBs used for transmission of the physical uplink shared channel across the plurality of slots. A specific method for obtaining this scaling factor is described in detail in Method 2 above.

FIG. 21 illustrates the signaling process and operation between a base station and a UE when applying the method of FIG. 20.

Referring to FIG. 21, the base station provides scheduling information for scheduling uplink transmission to the UE (S211).

The base station receives a transport block (TB) having a specific transport block size (TBS) through a PUSCH in each slot of a plurality of slots (S212).

Specifically, the base station receives a transport block (TB) having a specific transport block size (TBS) from the UE through a physical uplink shared channel (PUSCH) in each of a plurality of slots based on the scheduling information. In this case, the plurality of slots include a full duplex (FD) slot capable of simultaneously performing an uplink operation and a downlink operation using different frequency bands within a slot, and a half duplex (HD) slot capable of performing an uplink operation or a downlink operation within a slot, and the TBS is determined based on a value obtained by applying a scaling factor to a 'total number of resource elements allocated for PUSCH ($N_{RE}$)' determined based on a physical resource block (PRB) transmitted in the HD slot.

According to the method of the present disclosure, when PUSCH repeated transmission is performed across different types of slots in the time domain, for example, slots where FD slots and HD slots are mixed, the TBS can be determined by reflecting the frequency domain resources actually used in each slot, thereby reducing the probability of error occurrence.

Additionally, it is possible to avoid ambiguity in determining TBS when PUSCH repeated transmission is performed across different types of slots in the time domain.

In addition, in FIG. 20 and FIG. 21, the TB size determining method as described above can be applied in the following conditions/situations.

Condition 1. In SBFD cells, the UE always applies the above TB size determination method.

When a cell performs SBFD operation, the UE always applies this method. That is, even if the actual PUSCH is transmitted using only non-SBFD symbols, when the cell performs SBFD operation, the UE applies the above method to determine the $N_{RE}$ value. At this time, for example, if the UE is configured with information from the network about symbol resources that semi-statically operate in SBFD for a specific cell or symbol resources that can operate in SBFD, the UE can determine that the corresponding cell performs SBFD operation. And/or if the UE is configured with information about UL subbands (and/or DL subbands) for a specific cell from the network, the UE can determine that the corresponding cell performs SBFD operation.

Condition 2. If the symbols composing the first PUSCH transmission include an SBFD symbol, the above TB size determination method is applied.

When a PUSCH is repeatedly transmitted K times (including K=1), if the symbols constituting the first PUSCH transmission among the K PUSCH transmissions include at least one SBFD symbol, the UE determines the $N_{RE}$ value for the PUSCH transmission by applying the above method (i.e., the method according to the present disclosure). Otherwise, the UE determines the $N_{RE}$ value by applying the legacy method (i.e., the conventional method).

Or, when the PUSCH is transmitted repeatedly K times (including K=1), if all symbols constituting the first PUSCH transmission are composed of SBFD symbols, the UE determines the $N_{RE}$ value for the PUSCH transmission by applying the method according to the present disclosure. Otherwise, the UE determines the $N_{RE}$ value by applying the legacy method.

Or, when the PUSCH is transmitted repeatedly K times (including K=1), if the first PUSCH transmission is performed using $n'_{PRB}$ ($<n_{PRB}$) PRBs, the UE determines the $N_{RE}$ value for the PUSCH transmission by applying the method according to the present disclosure. Otherwise, the UE determines the $N_{RE}$ value by applying the legacy method.

For PUSCH repetition type B, the first PUSCH transmission may mean the first nominal repetition.

Condition 3. If the SBFD symbol is included in the symbols composing K PUSCH repeated transmissions, the TB size determination method according to the present disclosure is applied.

When a PUSCH is transmitted repeatedly K times (including K=1), if, for at least one of the K PUSCH transmissions, the symbols constituting the PUSCH transmission include at least one SBFD symbol, the UE determines the $N_{RE}$ value for the PUSCH transmission by applying the method according to the present disclosure. Otherwise, the UE determines the $N_{RE}$ value by applying the legacy method.

When a PUSCH is transmitted repeatedly K times (including K=1), if all symbols constituting the PUSCH transmission are SBFD symbols for at least one of the K PUSCH transmissions, the UE determines the $N_{RE}$ value for the PUSCH transmission by applying the method according to the present disclosure. Otherwise, the UE determines the $N_{RE}$ value by applying the legacy method.

Or, when the PUSCH is transmitted repeatedly K times (including K=1), for at least one of the K PUSCH transmissions, if the PUSCH transmission is performed using $n'_{PRB}$ ($<n_{PRB}$) PRBs, the UE determines the $N_{RE}$ value for the PUSCH transmission by applying the method according to the present disclosure. Otherwise, the UE determines the $N_{RE}$ value by applying the legacy method.

Condition 4. The TB size determination method according to this disclosure is applied according to the network indications.

If the UE receives explicit signaling from the network to reduce/adjust the TB size, the UE determines the $N_{RE}$ value for PUSCH transmission using the method according to the present disclosure. Otherwise, the UE determines the $N_{RE}$ value using the legacy method. The signaling may be indicated via RRC and/or DCI signaling.

In cases where the above signaling is indicated via an RRC message (information element), if the UE is indicated to reduce/adjust the TB size through the indication, the UE may always apply the method according to the present disclosure. Alternatively, if such an indication is received and additionally satisfies conditions 1, 2, or 3, the UE may apply the method according to the present disclosure.

In the case where the above signaling is indicated via DCI, if the reduction/adjustment of the TB size is indicated via the indicated DCI, the UE may apply the method according to the present disclosure to the PUSCH scheduled via the indicated DCI. Alternatively, if such an indication is received and the PUSCH scheduled via the DCI additionally satisfies condition 1, 2, or 3, the method according to the present disclosure may be applied to the PUSCH.

Condition 5. If the UE is configured with the value of $\alpha$ from the network, the TB size determination method according to the present disclosure is applied.

If the UE is configured with a value of $\alpha$ from the network, the UE determines the $N_{RE}$ value for PUSCH transmission using the method according to the present disclosure. Otherwise, the UE determines the $N_{RE}$ value using the legacy method. Alternatively, upon receiving such an indication, the UE may apply the method according to the present disclosure if conditions 1, 2, or 3 are additionally satisfied.

Condition 6. The TB size determination method according to the present disclosure is applied according to the indication of the type of symbol through which the PUSCH is transmitted (i.e., whether it is an SBFD symbol or a non-SBFD symbol).

The UE may be indicated via the DCI, which schedules the PUSCH from the network, regarding the symbol type (SBFD symbol/non-SBFD symbol) of the symbol resources performing that PUSCH transmission. That is, it may be indicated whether to perform the PUSCH transmission assuming an SBFD symbol or assuming a non-SBFD symbol. If the UE is indicated to perform PUSCH transmission by assuming a SBFD symbol, the UE determines the $N_{RE}$ value for PUSCH transmission by applying the method according to the present disclosure. Otherwise, the UE determines the $N_{RE}$ value by applying the legacy method.

At this time, the SBFD/non-SBFD symbol in the above content may have the following meanings.

i) The SBFD symbol may mean a symbol which is determined that the UE is operating in SBFD based on the semi-static signaling received from the network. Furthermore, the non-SBFD symbol may mean a symbol which is determined that the cell is operating in non-SBFD based on the semi-static signaling received from the network. Specifically, this assumption can be applied to conditions 1 to 5 above.

ii) Alternatively, an SBFD symbol may mean a symbol determined by the UE to be operating as an SBFD based on the semi-static signaling and dynamic signaling received from the network, or a symbol determined to be performing UL operations via resources within the UL subband. A non-SBFD symbol may mean a symbol where the UE determines it is operating in non-SBFD based on the static signaling and dynamic signaling received from the network, or a symbol where the UE determines that the UL operation is being performed not only on resources within the UL subband but also on resources outside the UL subband.

The above method may be applied only to PUSCH transmission, not TBoMS (TB processing over multiple slots).

5.2. Method of determining the TB size of a TBoMS transmission

The UE can calculate the value of $N_{RE}$ to determine the TB size for transmission of TBoMS as follows.

Method 1. The UE can determine the TB size (TBS) for TBoMS based on the number of PRBs used for TBoMS transmission in the SBFD symbol.

To determine the TB size of TBoMS transmission, the UE can determine the value of $N_{RE}$ as follows.

[Equation 4]
$$N_{RE} = N * min(156, N'_{RE}) \cdot n_{PRB} \cdot \alpha$$

In Equation 4, N may mean the number of slots that constitute TBoMS, and this N value can be indicated through 'numberOfSlotsTBoMS'.

In Equation 4, the value of $\alpha$ can be a positive number less than or equal to 1. More specifically, the value of $\alpha$ can be determined as follows.

Alt a. $\alpha$ can be equal to the ratio of the number of PRBs actually used for TBoMS transmission in SBFD resources to the number of PRBs allocated for TBoMS transmission. Alternatively, $\alpha$ can be equal to the ratio of the number of PRBs used for TBoMS transmission in an SBFD symbol to the number of PRBs used for TBoMS transmission in a non-SBFD symbol. That is, $\alpha$ can be equal to n'$_{PRB}$/n$_{PRB}$.

Alt b. $\alpha$ may be a value configured by the UE from the network. This value may be set via RRC, MAC-CE, DCI signaling, etc.

Method 2. The UE can determine the TB size of the PUSCH based on the number of PRBs used for the first TBoMS transmission.

To determine the TB size of TBoMS transmission, the UE can determine the value of $N_{RE}$ as follows.

[Equation 5]
$$N_{RE} = N_1 \cdot min(156, N'_{RE}) \cdot n_{PRB} + N_2 \cdot min(156, N'_{RE}) \cdot n_{PRB} \cdot \alpha$$

In Equation 5, the value of $\alpha$ can be a positive number less than or equal to 1. More specifically, the value of $\alpha$ can be determined as follows.

Alt a. $\alpha$ may be equal to the ratio of the number of PRBs actually used for TBoMS transmission in SBFD resources to the number of PRBs allocated for TBoMS transmission. Alternatively, $\alpha$ may be equal to the ratio of the number of PRBs used for TBoMS transmission in an SBFD symbol to the number of PRBs used for TBoMS transmission in a non-SBFD symbol. That is, $\alpha$ may be equal to n'$_{PRB}$/n$_{PRB}$.

Alt b. $\alpha$ may be a value configured to the UE from the network. This value may be set via RRC, MAC-CE, DCI signaling, etc.

The value of $N_2$ in Equation 5 can be determined by one of the following methods.

i) The $N_2$ value may mean the number of slots in which the symbols constituting the TBoMS transmission include at least one SBFD symbol among N TBoMS transmission slots. Alternatively, it may mean the number of slots in which all symbols constituting the TBoMS transmission are composed of SBFD symbols among N TBoMS transmission slots.
ii) The $N_2$ value may mean the number of slots in which the TBoMS is transmitted using fewer PRBs than the allocated number of PRBs, $n_{PRB}$, out of the N TBoMS transmission slots.
iii) Among N TBoMS transmission slots, this means the number of slots in which TBoMS is transmitted using $n'_{PRB}$ PRBs.
iv) it may mean N - $N_1$.

In Equation 5, the value of $N_1$ can be determined by one of the following methods.

i) The $N_1$ value means the number of slots in which the symbols constituting the TBoMS transmission include at least one non-SBFD symbol among N TBoMS transmission slots. Or, it means the number of slots in which all symbols constituting the TBoMS transmission are non-SBFD symbols among N TBoMS transmission slots.
ii) The $N_1$ value means the number of slots in which TBoMS is transmitted using all allocated $n_{PRB}$ PRBs among N TBoMS transmission slots.
iii) The $N_1$ value means the number of slots in which TBoMS is transmitted using $n_{PRB}$ PRBs among N TBoMS transmission slots.
iv) it may mean K - $K_2$.

At this time, the slots for determining the above $N_1$ and $N_2$ can be determined based on the N slots that constitute the first repetition of the TBoMS when the TBoMS is repeatedly transmitted.

Method 3. The UE can determine the TB size of the PUSCH based on the average number of PRBs used for K repeated TBoMS transmissions.

To determine the TB size of TBoMS transmission, the UE determines the value of $N_{RE}$ as follows.

[Equation 6]

$$N_{RE} = \frac{M_1}{K} \cdot \min(156, N'_{RE}) \cdot n_{PRB} + \frac{M_2}{K} \cdot \min(156, N'_{RE}) \cdot n_{PRB} \cdot \alpha$$

In Equation 6, the value of $\alpha$ can be a positive number less than or equal to 1. More specifically, the value of $\alpha$ can be determined as follows.

Alt a. $\alpha$ can be equal to the ratio of the number of PRBs actually used for TBoMS transmission in SBFD resources to the number of PRBs allocated for TBoMS transmission. Alternatively, $\alpha$ can be equal to the ratio of the number of PRBs used for TBoMS transmission in an SBFD symbol to the number of PRBs used for TBoMS transmission in a non-SBFD symbol. That is, $\alpha$ can be equal to $n'_{PRB}/n_{PRB}$.

Alt b. $\alpha$ may be a value configured to the UE from the network. This value may be set via RRC, MAC-CE, DCI signaling, etc.

The value of K may mean the number of repetitions applied to the TBoMS transmission.

The $M_2$ value may be determined by one of the following methods:

i) The $M_2$ value may mean the number of slots in which the symbols constituting the TBoMS transmission include at least one SBFD symbol among N*K TBoMS transmission slots when the TBoMS is transmitted repeatedly K times (including K=1). Alternatively, it may mean the number of slots in which all the symbols constituting the TBoMS transmission are composed of SBFD symbols among N*K TBoMS transmission slots.
ii) The $M_2$ value may mean the number of slots in which TBoMS is transmitted using PRBs less than the number of allocated $n_{PRB}$ PRBs among N*K TBoMS transmission slots.
iii) The $M_2$ value may mean the number of slots in which TBoMS is transmitted using $n'_{PRB}$ PRBs among N*K TBoMS transmission slots.
iv) The value of $M_2$ may be equal to N*K - $M_1$.

In Equation 6, the value of $M_1$ can be obtained by one of the following methods.

i) The $M_1$ value may mean the number of slots in which the symbols constituting the TBoMS transmission include at least one non-SBFD symbol among N*K TBoMS transmission slots when the TBoMS is transmitted repeatedly K times (including K=1). Alternatively, it may mean the number of slots in which all symbols constituting the TBoMS transmission are non-SBFD symbols among N*K TBoMS transmission slots.

ii) The $M_1$ value may mean the number of slots transmitted using all allocated $n_{PRB}$ PRBs among the N*K TBoMS transmission slots.

iii) The $M_1$ value may mean the number of slots in which TBoMS is transmitted using $n_{PRB}$ PRBs among N*K TBoMS transmission slots.

iv) The value of $M_1$ may be equal to N*K - $M_2$.

Additionally, this method can be applied in the following conditions/situations:
Condition 1. In SBFD cells, the UE always applies the above TB size determination method.
When a cell performs SBFD operation, the UE always applies this method. That is, even if the actual TBoMS is transmitted using only non-SBFD symbols, when the cell performs SBFD operation, the UE determines the $N_{RE}$ value by applying the method according to the present disclosure. At this time, for example, if the UE is configured with information about symbol resources that semi-statically operate in SBFD or symbol resources that can operate in SBFD for a specific cell from the network, the UE can determine that the cell performs SBFD operation. And/or if the UE is configured with information about UL subband (and/or DL subband) for a specific cell from the network, the UE can determine that the cell performs SBFD operation.
Condition 2. If the symbol composing the first slot of the first TBoMS transmission includes an SBFD symbol, the above TB size determination method is applied.
When TBoMS is transmitted repeatedly K times (including K=1), for the first slot among N slots constituting the first TBoMS transmission, if the transmission symbols of the TBoMS include at least one SBFD symbol, the UE determines the $N_{RE}$ value for the TBoMS transmission by applying the method according to the present disclosure. Otherwise, the UE determines the $N_{RE}$ value by applying the legacy method.
Alternatively, when TBoMS is transmitted repeatedly K times (including K=1), for the first slot among N slots constituting the first TBoMS transmission, if all transmission symbols of the TBoMS are composed of SBFD symbols, the UE determines the $N_{RE}$ value for the TBoMS transmission by applying the method according to the present disclosure. Otherwise, the UE determines the $N_{RE}$ value by applying the legacy method.
Or, when TBoMS is transmitted repeatedly K times (including K=1), for the first slot among N slots constituting the first TBoMS transmission, if the TBoMS transmission is performed using $n'_{PRB}$ ($<n_{PRB}$) PRBs, the UE determines the $N_{RE}$ value for the TBoMS transmission by applying the method according to the present disclosure. Otherwise, the UE determines the $N_{RE}$ value by applying the legacy method.
Condition 3. If the symbols composing the first TBoMS transmission include an SBFD symbol, the above TB size determination method is applied.
When TBoMS is transmitted repeatedly K times (including K=1), if the symbols used for transmitting TBoMS within N slots constituting the first TBoMS transmission include at least one SBFD symbol, the UE determines the $N_{RE}$ value for the TBoMS transmission by applying the method according to the present disclosure. Otherwise, the UE determines the $N_{RE}$ value by applying the legacy method.
Alternatively, when TBoMS is transmitted repeatedly K times (including K=1), if, among the N slots constituting the first TBoMS transmission, all symbols used for TBoMS transmission for at least one slot are composed of SBFD symbols, the UE determines the $N_{RE}$ value for TBoMS transmission by applying the method according to the present disclosure. Otherwise, the UE determines the $N_{RE}$ value by applying the legacy method.
Or, when TBoMS is transmitted repeatedly K times (including K=1), if, for N slots constituting the first TBoMS transmission, the TBoMS transmission is performed using $n'_{PRB}$ ($<n_{PRB}$) PRBs in at least one slot, the UE determines the $N_{RE}$ value for the TBoMS transmission by applying the method according to the present disclosure. Otherwise, the UE determines the $N_{RE}$ value by applying the legacy method.
Condition 4. If the symbols composing K TBoMS repeated transmissions include an SBFD symbol, the above TB size determination method is applied.
When TBoMS is transmitted repeatedly K times (including K=1), if the symbols used for transmitting TBoMS within the N*K slots constituting the TBoMS transmission include at least one SBFD symbol, the UE determines the $N_{RE}$ value for the TBoMS transmission by applying the method according to the present disclosure. Otherwise, the UE determines the $N_{RE}$ value by applying the legacy method.
Or, when TBoMS is transmitted repeatedly K times (including K=1), if, among the N*K slots constituting the TBoMS transmission, all symbols used for the TBoMS transmission for at least one slot are composed of SBFD symbols, the UE determines the $N_{RE}$ value for the TBoMS transmission by applying the method according to the present disclosure. Otherwise, the UE determines the $N_{RE}$ value by applying the legacy method.
Or, when TBoMS is transmitted repeatedly K times (including K=1), if, for N*K slots constituting TBoMS transmission, TBoMS transmission is transmitted using n'$_{PRB}$ (<n$_{PRB}$) PRBs in at least one slot, the UE determines the N$_{RE}$ value for TBoMS transmission by applying the method according to the present disclosure. Otherwise, the UE determines the N$_{RE}$ value by applying the legacy method.

Condition 5. Apply the above TB size determination method according to the network indications.

If the UE receives explicit signaling from the network to reduce/adjust the TB size, the UE determines the N$_{RE}$ value for TBoMS transmission using the method according to the present disclosure. Otherwise, the UE determines the N$_{RE}$ value using the legacy method. This signaling may be indicated via RRC and/or DCI signaling.

In the case where the above signaling is indicated via an RRC message, if the UE is indicated to reduce/adjust the TB size through the above indication, the UE may always apply the method according to the present disclosure. Alternatively, if such an indication is received and additionally satisfies conditions 1, 2, or 3, the UE may apply the method according to the present disclosure.

In the case where the above signaling is indicated via DCI, if the reduction/adjustment of the TB size is indicated via the indicated DCI, the UE may apply the method according to the present disclosure to the TBoMS scheduled via the indicated DCI. Alternatively, if such an indication is received and the TBoMS scheduled via the DCI additionally satisfies condition 1, 2, or 3, the UE may apply the method according to the present disclosure to the TBoMS.

Condition 6. If the UE is configured with the value of α from the network, the above TB size determination method is applied.

If the UE is configured with a value of α from the network, the UE determines the N$_{RE}$ value for TBoMS transmission using the method according to the present disclosure. Otherwise, the UE determines the N$_{RE}$ value using the legacy method. Alternatively, upon receiving such indications, the UE may apply the method according to the present disclosure if conditions 1, 2, or 3 are additionally satisfied.

Condition 7. The above TB size determination method is applied according to the indication of the type of symbol (SBFD symbol/non-SBFD symbol) transmitted by TBoMS.

A UE can be indicated by the network via DCI scheduling TBoMS, regarding the symbol type (SBFD symbol/non-SBFD symbol) of symbol resources for performing the corresponding PUSCH transmission. That is, the UE can be indicated whether to perform TBoMS transmission assuming SBFD symbols or non-SBFD symbols. If the UE is indicated to perform TBoMS transmission assuming SBFD symbols, the UE determines the N$_{RE}$ value for TBoMS transmission by applying the method according to the present disclosure. Otherwise, the UE determines the N$_{RE}$ value by applying the legacy method.

In the above, SBFD/non-SBFD symbol may have the following meanings:

i) The SBFD symbol may mean a symbol that is determined to operate in SBFD based on the semi-static signaling received by the UE from the network. Additionally, a non-SBFD symbol may mean a symbol determined that a cell is operating in non-SBFD based on the semi-static signaling received by the UE from the network. This assumption can be applied to conditions 1 to 5 above.

ii) Alternatively, an SBFD symbol may mean a symbol determined by the UE to be operating as an SBFD based on the semi-passive signaling and dynamic signaling received from the network, or a symbol determined to be performing UL operations via resources within the UL subband. A non-SBFD symbol may mean a symbol where the UE determines it is operating in non-SBFD based on the static signaling and dynamic signaling received from the network, or a symbol where the UE determines that the UL operation is being performed not only on resources within the UL subband but also on resources outside the UL subband.

When a cell performs SBFD operation, the UE can determine the TB size of the PUSCH/TBoMS for PUSCH/TBoMS transmission as described above. This allows the PUSCH to be transmitted by applying an appropriate TB size according to the number of PRBs in which the PUSCH/TBoMS is actually transmitted.

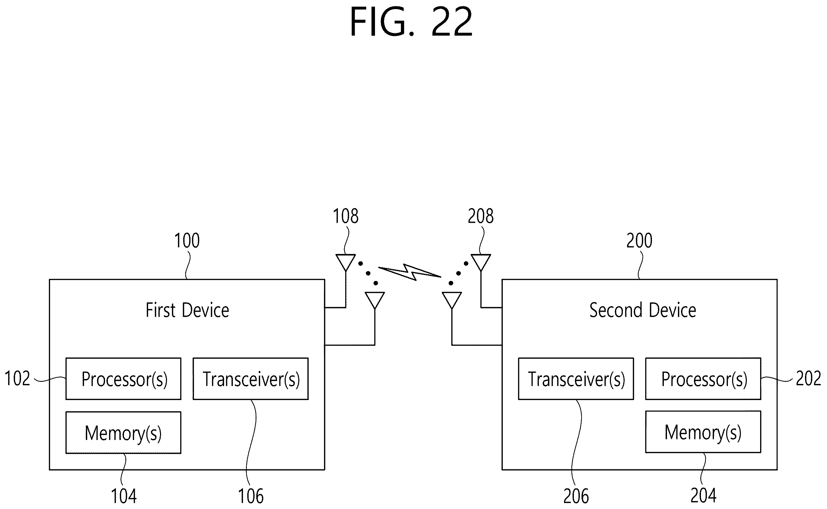

FIG. 22 illustrates a wireless device applicable to the present specification.

Referring to FIG. 22, a first wireless device 100 and a second wireless device 200 may transmit radio signals through a variety of RATs (e.g., LTE and NR).

The first wireless device 100 may include at least one processor 102 and at least one memory 104 and additionally further include at least one transceiver 106 and/or at least one antenna 108. At least one processor 102 (hereinafter simply referred to as a processor) controls at least one memory 104 (hereinafter simply referred to as a memory) and/or at least one transceiver 106 (hereinafter simply referred to as a transceiver), and may be configured to implement the descriptions, functions, procedures, proposals, methods and/or operational flowcharts disclosed in this document. For example, the processors 102 may process information within the memory 104 to generate first information/signals and then transmit radio signals including the first information/signals through the transceivers 106. In addition, the processor 102 may receive radio signals including second information/signals through the transceiver 106 and then store information obtained by processing the second information/signals in the memory 104. The memory 104 may be connected to the processory102 and may store a variety of information related to operations of the processor 102. For example, the memory 104 may store software code including commands for performing a part or the entirety of processes controlled by the processor 102 or for performing the descriptions, functions, procedures, proposals, methods, and/or operational flowcharts disclosed in this document. Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. The transceiver 106 may include a transmitter and/or a receiver. The transceiver 106 may be interchangeably used with a radio frequency (RF) unit. In the present specification, the wireless device may represent a communication modem/circuit/chip. The processor 102 determines a size of a transport block (TB) and transmits the TB having the size through a physical uplink shared channel (PUSCH) in each of a plurality of slots. The plurality of slots include a full duplex (FD) slot capable of simultaneously performing an uplink operation and a downlink operation using different frequency bands within a slot, and a half duplex (HD) slot capable of performing an uplink operation or a downlink operation within a slot, and the size is determined based on a value obtained by applying a scaling factor to a 'total number of resource elements allocated for PUSCH ($N_{RE}$)' determined based on a physical resource block (PRB) transmitted in the HD slot. The specific operation has been described with reference to FIGS. 18 to 21.

The second wireless device 200 may include at least one processor 202 and at least one memory 204 and additionally further include at least one transceiver 206 and/or at least one antenna 208. The processor 202 may control the memory 204 and/or the transceiver 206 and may be configured to implement the descriptions, functions, procedures, proposals, methods, and/or operational flowcharts disclosed in this document. For example, the processor 202 may process information within the memory 204 to generate third information/signals and then transmit radio signals including the third information/signals through the transceiver 206. In addition, the processor 202 may receive radio signals including fourth information/signals through the transceiver 206 and then store information obtained by processing the fourth information/signals in the memory 204. The memory 204 may be connected to the processor 202 and may store a variety of information related to operations of the processor 202. For example, the memory 204 may store software code including commands for performing a part or the entirety of processes controlled by the processor 202 or for performing the descriptions, functions, procedures, proposals, methods, and/or operational flowcharts disclosed in this document. Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. The transceiver 206 may include a transmitter and/or a receiver. The transceiver 206 may be interchangeably used with an RF unit. In the present specification, the wireless device may represent a communication modem/circuit/chip. The processor 202 transmits scheduling information for scheduling uplink transmission to a user equipment (UE) and receives a transport block (TB) having a specific transport block size (TBS) from the UE through a physical uplink shared channel (PUSCH) in each of a plurality of slots based on the scheduling information. The plurality of slots include a full duplex (FD) slot capable of simultaneously performing an uplink operation and a downlink operation using different frequency bands within a slot, and a half duplex (HD) slot capable of performing an uplink operation or a downlink operation within a slot, and the TBS is determined based on a value obtained by applying a scaling factor to a 'total number of resource elements allocated for PUSCH ($N_{RE}$)' determined based on a physical resource block (PRB) transmitted in the HD slot. The specific operation has been described with reference to FIGS. 18 to 21.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The one or more processors 102 and 202 may be implemented with at least one computer readable medium (CRM) including instructions to be executed by at least one processor.

That is, at least one computer readable medium (CRM) having an instruction to be executed by at least one processor to perform operations includes: determining a size of a transport block (TB) and transmitting the TB having the size through a physical uplink shared channel (PUSCH) in each of a plurality of slots. The plurality of slots include a full duplex (FD) slot capable of simultaneously performing an uplink operation and a downlink operation using different frequency bands within a slot, and a half duplex (HD) slot capable of performing an uplink operation or a downlink operation within a slot, and the size is determined based on a value obtained by applying a scaling factor to a 'total number of resource elements allocated for PUSCH ($N_{RE}$)' determined based on a physical resource block (PRB) transmitted in the HD slot. The specific operation has been described with reference to FIGS. 18 to 21.

The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. In addition, the one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. In addition, the one or more processors 102 and 202 may perform control so that the one or more transceivers 106 and 206 may receive user data, control information, or radio signals from one or more other devices. In addition, the one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

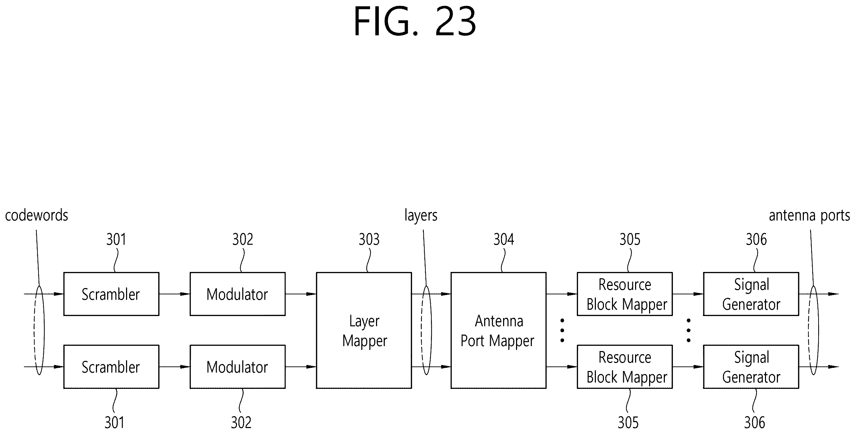

FIG. 23 shows an example of a structure of a signal processing module. Herein, signal processing may be performed in the processors 102 and 202 of FIG. 22.

Referring to FIG. 23, the transmitting device (e.g., a processor, the processor and a memory, or the processor and a transceiver) in a UE or BS may include a scrambler 301, a modulator 302, a layer mapper 303, an antenna port mapper 304, a resource block mapper 305, and a signal generator 306.

The transmitting device can transmit one or more codewords. Coded bits in each codeword are scrambled by the corresponding scrambler 301 and transmitted over a physical channel. A codeword may be referred to as a data string and may be equivalent to a transport block which is a data block provided by the MAC layer.

Scrambled bits are modulated into complex-valued modulation symbols by the corresponding modulator 302. The modulator 302 can modulate the scrambled bits according to a modulation scheme to arrange complex-valued modulation symbols representing positions on a signal constellation. The modulation scheme is not limited and m-PSK (m-Phase Shift Keying) or m-QAM (m-Quadrature Amplitude Modulation) may be used to modulate the coded data. The modulator may be referred to as a modulation mapper.

The complex-valued modulation symbols can be mapped to one or more transport layers by the layer mapper 303. Complex-valued modulation symbols on each layer can be mapped by the antenna port mapper 304 for transmission on an antenna port.

Each resource block mapper 305 can map complex-valued modulation symbols with respect to each antenna port to appropriate resource elements in a virtual resource block allocated for transmission. The resource block mapper can map the virtual resource block to a physical resource block according to an appropriate mapping scheme. The resource block mapper 305 can allocate complex-valued modulation symbols with respect to each antenna port to appropriate subcarriers and multiplex the complex-valued modulation symbols according to a user.

Signal generator 306 can modulate complex-valued modulation symbols with respect to each antenna port, that is, antenna-specific symbols, according to a specific modulation scheme, for example, OFDM (Orthogonal Frequency Division Multiplexing), to generate a complex-valued time domain OFDM symbol signal. The signal generator can perform IFFT (Inverse Fast Fourier Transform) on the antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator may include an IFFT module, a CP inserting unit, a digital-to-analog converter (DAC) and a frequency upconverter.

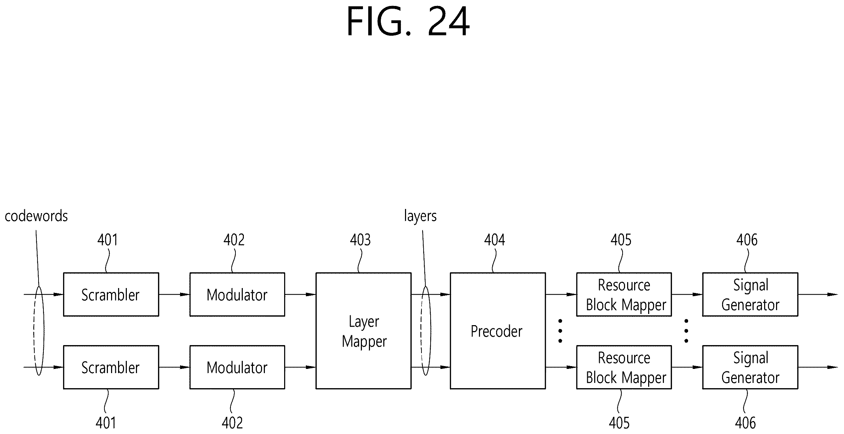

FIG. 24 shows another example of a structure of a signal processing module in a transmitting device. Herein, signal processing may be performed in a processor of a UE/BS, such as the processors 102 and 202 of FIG. 22.

Referring to FIG. 24, the transmitting device (e.g., a processor, the processor and a memory, or the processor and a transceiver) in the UE or the BS may include a scrambler 401, a modulator 402, a layer mapper 403, a precoder 404, a resource block mapper 405, and a signal generator 406.

The transmitting device can scramble coded bits in a codeword by the corresponding scrambler 401 and then transmit the scrambled coded bits through a physical channel.

Scrambled bits are modulated into complex-valued modulation symbols by the corresponding modulator 402. The modulator can modulate the scrambled bits according to a predetermined modulation scheme to arrange complex-valued modulation symbols representing positions on a signal constellation. The modulation scheme is not limited and pi/2-BPSK (pi/2-Binary Phase Shift Keying), m-PSK (m-Phase Shift Keying) or m-QAM (m-Quadrature Amplitude Modulation) may be used to modulate the coded data.

The complex-valued modulation symbols can be mapped to one or more transport layers by the layer mapper 403.

Complex-valued modulation symbols on each layer can be precoded by the precoder 404 for transmission on an antenna port. Here, the precoder may perform transform precoding on the complex-valued modulation symbols and then perform precoding. Alternatively, the precoder may perform precoding without performing transform precoding. The precoder 404 can process the complex-valued modulation symbols according to MIMO using multiple transmission antennas to output antenna-specific symbols and distribute the antenna-specific symbols to the corresponding resource block mapper 405. An output z of the precoder 404 can be obtained by multiplying an output y of the layer mapper 403 by an N x M precoding matrix W. Here, N is the number of antenna ports and M is the number of layers.

Each resource block mapper 405 maps complex-valued modulation symbols with respect to each antenna port to appropriate resource elements in a virtual resource block allocated for transmission.

The resource block mapper 405 can allocate complex-valued modulation symbols to appropriate subcarriers and multiplex the complex-valued modulation symbols according to a user.

Signal generator 406 can modulate complex-valued modulation symbols according to a specific modulation scheme, for example, OFDM, to generate a complex-valued time domain OFDM symbol signal. The signal generator 406 can perform IFFT (Inverse Fast Fourier Transform) on antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator 406 may include an IFFT module, a CP inserting unit, a digital-to-analog converter (DAC) and a frequency upconverter.

The signal processing procedure of the receiving device may be reverse to the signal processing procedure of the transmitting device. Specifically, the processor of the transmitting device decodes and demodulates RF signals received through antenna ports of the transceiver. The receiving device may include a plurality of reception antennas, and signals received through the reception antennas are restored to baseband signals, and then multiplexed and demodulated according to MIMO to be restored to a data string intended to be transmitted by the transmitting device. The receiving device may include a signal restoration unit that restores received signals to baseband signals, a multiplexer for combining and multiplexing received signals, and a channel demodulator for demodulating multiplexed signal strings into corresponding codewords. The signal restoration unit, the multiplexer and the channel demodulator may be configured as an integrated module or independent modules for executing functions thereof. More specifically, the signal restoration unit may include an analog-to-digital converter (ADC) for converting an analog signal into a digital signal, a CP removal unit that removes a CP from the digital signal, an FET module for applying FFT (fast Fourier transform) to the signal from which the CP has been removed to output frequency domain symbols, and a resource element demapper/equalizer for restoring the frequency domain symbols to antenna-specific symbols. The antenna-specific symbols are restored to transport layers by the multiplexer and the transport layers are restored by the channel demodulator to codewords intended to be transmitted by the transmitting device.

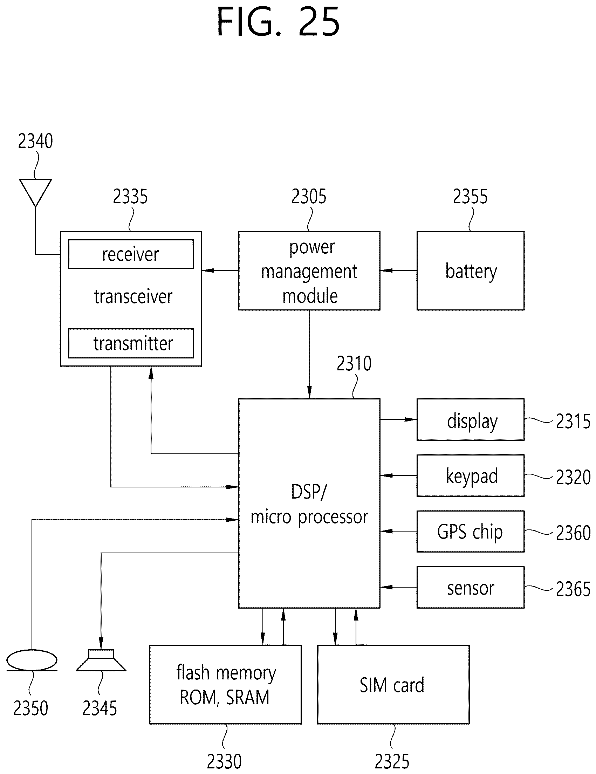

FIG. 25 illustrates an example of a wireless communication device according to an implementation example of the present disclosure.

Referring to FIG. 25, the wireless communication device, for example, a UE may include at least one of a processor 2310 such as a digital signal processor (DSP) or a microprocessor, a transceiver 2335, a power management module 2305, an antenna 2340, a battery 2355, a display 2315, a keypad 2320, a global positioning system (GPS) chip 2360, a sensor 2365, a memory 2330, a subscriber identification module (SIM) card 2325, a speaker 2345 and a microphone 2350. A plurality of antennas and a plurality of processors may be provided.

The processor 2310 can implement functions, procedures and methods described in the present description. The processor 2310 in FIG. 25 may be the processors 102 and 202 in FIG. 22.

The memory 2330 is connected to the processor 2310 and stores information related to operations of the processor. The memory may be located inside or outside the processor and connected to the processor through various techniques such as wired connection and wireless connection. The memory 2330 in FIG. 25 may be the memories 104 and 204 in FIG. 22.

A user can input various types of information such as telephone numbers using various techniques such as pressing buttons of the keypad 2320 or activating sound using the microphone 2350. The processor 2310 can receive and process user information and execute an appropriate function such as calling using an input telephone number. In some scenarios, data can be retrieved from the SIM card 2325 or the memory 2330 to execute appropriate functions. In some scenarios, the processor 2310 can display various types of information and data on the display 2315 for user convenience.

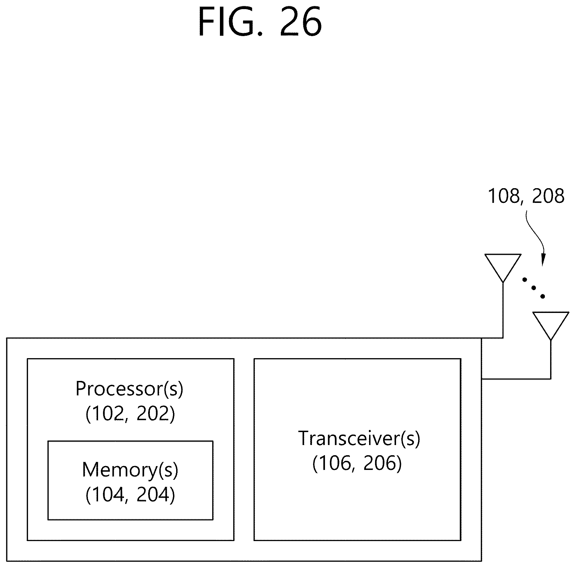

The transceiver 2335 is connected to the processor 2310 and transmit and/or receive RF signals. The processor can control the transceiver in order to start communication or to transmit RF signals including various types of information or data such as voice communication data. The transceiver includes a transmitter and a receiver for transmitting and receiving RF signals. The antenna 2340 can facilitate transmission and reception of RF signals. In some implementation examples, when the transceiver receives an RF signal, the transceiver can forward and convert the signal into a baseband frequency for processing performed by the processor. The signal can be processed through various techniques such as converting into audible or readable information to be output through the speaker 2345. The transceiver in FIG. 25 may be the transceivers 106 and 206 in FIG. 26.

Although not shown in FIG. 25, various components such as a camera and a universal serial bus (USB) port may be additionally included in the UE. For example, the camera may be connected to the processor 2310.

FIG. 25 is an example of implementation with respect to the UE and implementation examples of the present disclosure are not limited thereto. The UE need not essentially include all the components shown in FIG. 25. That is, some of the components, for example, the keypad 2320, the GPS chip 2360, the sensor 2365 and the SIM card 2325 may not be essential components. In this case, they may not be included in the UE.

FIG. 26 shows another example of a wireless device.

Referring to FIG. 26, the wireless device may include at least one processor 102 and 202, at least one memory 104 and 204, at least one transceiver 106 and 206 and one or more antennas 108 and 208.

The example of the wireless device described in FIG. 26 is different from the example of the wireless described in FIG. 22 in that the processors 102 and 202 and the memories 104 and 204 are separated in FIG. 22 whereas the memories 104 and 204 are included in the processors 102 and 202 in the example of FIG. 26. That is, the processor and the memory may constitute one chipset.

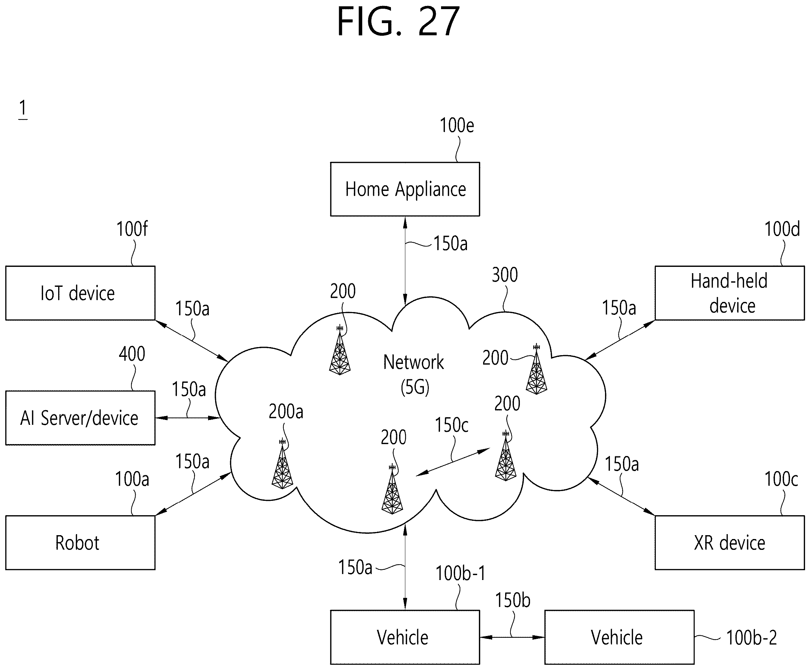

FIG. 27 illustrates a communication system 1 applied to the present specification.

Referring to FIG. 27, a communication system 1 applied to the present specification includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). In addition, the IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication(e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Meanwhile, the NR supports multiple numerologies (or subcarrier spacing (SCS)) for supporting diverse 5G services. For example, if the SCS is 15kHz, a wide area of the conventional cellular bands may be supported. If the SCS is 30kHz/60kHz, a dense-urban, lower latency, and wider carrier bandwidth is supported. If the SCS is 60kHz or higher, a bandwidth greater than 24.25GHz is used in order to overcome phase noise.

An NR frequency band may be defined as a frequency range of two types (FR1, FR2). Values of the frequency range may be changed. For example, the frequency range of the two types (FR1, FR2) may be as shown below in Table 7. For convenience of explanation, among the frequency ranges that are used in an NR system, FR1 may mean a "sub 6GHz range", and FR2 may mean an "above 6GHz range" and may also be referred to as a millimeter wave (mmW).

[Table 7]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed. For example, as shown in Table 8 below, FR1 may include a band in the range of 410MHz to 7125MHz. That is, FR1 may include a frequency band of at least 6GHz (or 5850, 5900, 5925 MHz, and so on). For example, a frequency band of at least 6GHz (or 5850, 5900, 5925 MHz, and so on) included in FR1 may include an unlicensed band. The unlicensed band may be used for diverse purposes, e.g., the unlicensed band for vehicle-specific communication (e.g., automated driving).

[Table 8]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

Claims disclosed in the present specification can be combined in various ways. For example, technical features in method claims of the present specification can be combined to be implemented or performed in an apparatus, and technical features in apparatus claims of the present specification can be combined to be implemented or performed in a method. Further, technical features in method claims and apparatus claims of the present specification can be combined to be implemented or performed in an apparatus. Further, technical features in method claims and apparatus claims of the present specification can be combined to be implemented or performed in a method.

**Claims**

1. A method of operating a user equipment (UE) in a wireless communication system, the method comprising:

   determining a size of a transport block (TB); and
   transmitting the TB having the size through a physical uplink shared channel (PUSCH) in each of a plurality of slots,
   wherein the plurality of slots include a full duplex (FD) slot capable of simultaneously performing an uplink operation and a downlink operation using different frequency bands within a slot, and a half duplex (HD) slot capable of performing an uplink operation or a downlink operation within a slot, and
   wherein the size is determined based on a value obtained by applying a scaling factor to a 'total number of resource elements allocated for PUSCH ($N_{RE}$)' determined based on a physical resource block (PRB) transmitted in the HD slot.

2. The method of claim 1, wherein the scaling factor is a ratio of the number of PRBs used for transmission of the physical uplink shared channel in an FD symbol included in the FD slot to the number of PRBs allocated for transmission of the physical uplink shared channel.

3. The method of claim 1, wherein the scaling factor is a ratio of the number of PRBs used for transmission of the physical uplink shared channel in an FD symbol included in the FD slot to the number of PRBs allocated for transmission of the physical uplink shared channel in a HD symbol included in the HD slot.

4. The method of claim 1, wherein the scaling factor is a value configured from a network.

5. The method of claim 4, wherein the scaling factor is configured through a radio resource control (RRC) message.

6. The method of claim 4, wherein the scaling factor is configured through a media access control-control element (MAC-CE).

7. The method of claim 4, wherein the scaling factor is configured through downlink control information (DCI).

8. The method of claim 1, wherein the scaling factor is determined based on an average value of the number of PRBs used for transmission of the physical uplink shared channel in the plurality of slots.

9. A user equipment (UE), comprising:

   at least one transceiver;
   at least one memory; and
   at least one processor operably coupled to the at least one memory and the at least one transceiver, wherein the at least one processor is adapted to:

      determine a size of a transport block (TB); and
      transmit the TB having the size through a physical uplink shared channel (PUSCH) in each of a plurality of slots,
      wherein the plurality of slots include a full duplex (FD) slot capable of simultaneously performing an uplink operation and a downlink operation using different frequency bands within a slot, and a half duplex (HD) slot capable of performing an uplink operation or a downlink operation within a slot, and
      wherein the size is determined based on a value obtained by applying a scaling factor to a 'total number of resource elements allocated for PUSCH ($N_{RE}$)' determined based on a physical resource block (PRB) transmitted in the HD slot.

10. The UE of claim 9, wherein the scaling factor is a ratio of the number of PRBs used for transmission of the physical uplink shared channel in an FD symbol included in the FD slot to the number of PRBs allocated for transmission of the physical uplink shared channel.

11. The UE of claim 9, wherein the scaling factor is a ratio of the number of PRBs used for transmission of the physical uplink shared channel in an FD symbol included in the FD slot to the number of PRBs allocated for transmission of the physical uplink shared channel in a HD symbol included in the HD slot.

12. The UE of claim 9, wherein the scaling factor is a value configured from a network.

13. The UE of claim 12, wherein the scaling factor is configured through a radio resource control (RRC) message.

14. The UE of claim 12, wherein the scaling factor is configured through a media access control-control element (MAC-CE).

15. The UE of claim 12, wherein the scaling factor is configured through downlink control information (DCI).

16. The UE of claim 9, wherein the scaling factor is determined based on an average value of the number of PRBs used for transmission of the physical uplink shared channel in the plurality of slots.

17. An apparatus comprising:

　　at least one memory; and
　　at least one processor operably coupled to the at least one memory,
　　wherein the at least one processor is adapted to:

　　　　determine a size of a transport block (TB); and
　　　　transmit the TB having the size through a physical uplink shared channel (PUSCH) in each of a plurality of slots,
　　　　wherein the plurality of slots include a full duplex (FD) slot capable of simultaneously performing an uplink operation and a downlink operation using different frequency bands within a slot, and a half duplex (HD) slot capable of performing an uplink operation or a downlink operation within a slot, and
　　　　wherein the size is determined based on a value obtained by applying a scaling factor to a 'total number of resource elements allocated for PUSCH ($N_{RE}$)' determined based on a physical resource block (PRB) transmitted in the HD slot.

18. At least one computer readable medium (CRM) having instructions to be executed by at least one processor to perform operations includes:

　　　　determining a size of a transport block (TB); and
　　　　transmitting the TB having the size through a physical uplink shared channel (PUSCH) in each of a plurality of slots,
　　　　wherein the plurality of slots include a full duplex (FD) slot capable of simultaneously performing an uplink operation and a downlink operation using different frequency bands within a slot, and a half duplex (HD) slot capable of performing an uplink operation or a downlink operation within a slot, and
　　　　wherein the size is determined based on a value obtained by applying a scaling factor to a 'total number of resource elements allocated for PUSCH ($N_{RE}$)' determined based on a physical resource block (PRB) transmitted in the HD slot.

19. A method of operating a base station in a wireless communication system, the method comprising:

　　　　transmitting scheduling information for scheduling uplink transmission to a user equipment (UE); and
　　　　receiving a transport block (TB) having a specific transport block size (TBS) from the UE through a physical uplink shared channel (PUSCH) in each of a plurality of slots based on the scheduling information;
　　　　wherein the plurality of slots include a full duplex (FD) slot capable of simultaneously performing an uplink operation and a downlink operation using different frequency bands within a slot, and a half duplex (HD) slot capable of performing an uplink operation or a downlink operation within a slot, and
　　　　wherein the TBS is determined based on a value obtained by applying a scaling factor to a 'total number of resource elements allocated for PUSCH ($N_{RE}$)' determined based on a physical resource block (PRB) transmitted in the HD slot.

20. A base station comprising:

　　　　at least one transceiver;
　　　　at least one memory; and
　　　　at least one processor operably coupled to the at least one memory and the at least one transceiver, wherein the at least one processor is adapted to:

transmit scheduling information for scheduling uplink transmission to a user equipment (UE); and receive a transport block (TB) having a specific transport block size (TBS) from the UE through a physical uplink shared channel (PUSCH) in each of a plurality of slots based on the scheduling information; wherein the plurality of slots include a full duplex (FD) slot capable of simultaneously performing an uplink operation and a downlink operation using different frequency bands within a slot, and a half duplex (HD) slot capable of performing an uplink operation or a downlink operation within a slot, and

wherein the TBS is determined based on a value obtained by applying a scaling factor to a 'total number of resource elements allocated for PUSCH ($N_{RE}$)' determined based on a physical resource block (PRB) transmitted in the HD slot.

# FIG. 1

# FIG. 2

| UE | BS |
|---|---|
| PDCP | PDCP |
| RLC | RLC |
| MAC | MAC |
| PHY | PHY |

# FIG. 3

# FIG. 4

# FIG. 5

**gNB**
- RRM between cells
- RB control
- Connection mobility control
- Wireless access control
- Measurement setting and provision
- Dynamic resource allocation (scheduler)

NG-RAN

**AMF**
- NAS security
- Idle state mobility processing

**SMF**
- UE IP address allocation
- PDU session control

**UPF**
- Mobility anchoring
- PDU processing

Internet

5GC

EP 4 693 969 A1

# FIG. 6

| One Frame (10ms) |
|---|

| Half-Frame (5ms) | Half-Frame (5ms) |
|---|---|

| Subframe 0 (1ms) | Subframe 4 (1ms) | Subframe 5 (1ms) | Subframe 9 (1ms) |
|---|---|---|---|

Subframe (1ms)

**15KHz**

| Slot 0 (14symbols) |
|---|

1ms

**30KHz**

| Slot 0 (14symbols) | Slot 1 |
|---|---|

500us

**60KHz**

| Slot 0 (14symbols) | Slot 1 | Slot 2 | Slot 3 |
|---|---|---|---|

250us

**120KHz**

| Slot 0 (14symbols) | Slot 1 | Slot 2 | Slot 3 | Slot 4 | Slot 5 | Slot 6 | Slot 7 |
|---|---|---|---|---|---|---|---|

125us

# FIG. 7

Resource grid

A carrier { A BWP { 1RB=12 subcarriers

1 RE

1subcarrier

1 symbol

1=0 •••

k=0

EP 4 693 969 A1

# FIG. 8

CCE #2    CCE #n

$N^{CORESET}_{RB}$ resource blocks

CCE #1

1, 2 or 3 OFDM symbols

FIG. 9

# FIG. 10

DL only

UL only

UL control

Mixed UL-DL

DL control

Slot

: DL    : UL

# FIG. 11

# FIG. 12

1 Slot

$T_0$      $T_1$      $T_2$

PUSCH repetition type A

# FIG. 13

1 Slot

10 Symbols

7 Symbols

$N_0$    $N_1$    $N_2$

(a)

Slot boundary     Invalid symbol

Actual repetition2    Actual repetition3

10 Symbols

7 Symbols

$A_0$   $A_1$   $A_2$    $A_3$

Actual repetition0   Actual repetition1

(b)

# FIG. 14

(a)

DL    UL

Frequency

Carrier #0
Subband-wise Full Duplex

(b)

DL    UL

Frequency

Carrier #0
Spectrum-Sharing Full Duplex

# FIG. 15

(a)

(b)

# FIG. 16

A: First time resource
B: Second time resource

(a)

(b)

# FIG. 17

A: First time resource
B: Second time resource

(a)

(b)

# FIG. 18

EP 4 693 969 A1

# FIG. 19

Systematic bits | Parity bits

$d_0$     $d_{N-1}$

RV0   RV1   RV2   RV3

$d_0$   191   $d_{N-1}$

RV0   RV1   RV2   RV3

$d_0$   192   $d_{N-1}$

RV0   RV1   RV2   RV3

$d_0$   193   $d_{N-1}$

RV0   RV1   RV2   RV3

$d_0$   194   $d_{N-1}$

RV0    Systematic bits

RV3    RV1

Parity bits    Transmitted bits

RV2

EP 4 693 969 A1

# FIG. 20

| Determining the size of a transport block (TB) | S201 |

↓

| Transmitting the TB having the size through a physical uplink shared channel (PUSCH) in each slot of a plurality of slots, wherein the plurality of slots include an FD (full duplex) slot capable of simultaneously performing an uplink operation and a downlink operation using different frequency bands within the slot and an HD (half duplex) slot capable of performing an uplink operation or a downlink operation within the slot, and the size is determined based on a value obtained by applying a scaling factor to the 'number of total resource elements allocated for PUSCH ($N_{RE}$)' determined based on a physical resource block (PRB) transmitted in the HD slot | S202 |

# FIG. 21

| BS | | UE |

Scheduling information
for scheduling uplink transmission
S211

Receiving a transport block (TB)
having a specific transport block size (TBS)
through a PUSCH in each slot of a plurality of slots
S212

# FIG. 22

EP 4 693 969 A1

# FIG. 23

codewords

layers

antenna ports

| 301 | 302 | 303 | 304 | 305 | 306 |
|---|---|---|---|---|---|
| Scrambler | Modulator | Layer Mapper | Antenna Port Mapper | Resource Block Mapper | Signal Generator |
| Scrambler | Modulator | | | Resource Block Mapper | Signal Generator |

301   302

305   306

# FIG. 24

codewords

layers

401 → Scrambler → 402 → Modulator → 403 Layer Mapper → 404 Precoder → 405 Resource Block Mapper → 406 Signal Generator

401 → Scrambler → 402 → Modulator → 405 Resource Block Mapper → 406 Signal Generator

# FIG. 25

# FIG. 26

108, 208

Processor(s)
(102, 202)

Memory(s)
(104, 204)

Transceiver(s)
(106, 206)

# FIG. 27

## INTERNATIONAL SEARCH REPORT

| International application No. |
| --- |
| **PCT/KR2024/095667** |

| A. | CLASSIFICATION OF SUBJECT MATTER |
| --- | --- |

**H04L 1/00**(2006.01)i; **H04L 1/08**(2006.01)i; **H04L 5/14**(2006.01)i

According to International Patent Classification (IPC) or to both national classification and IPC

| B. | FIELDS SEARCHED |
| --- | --- |

Minimum documentation searched (classification system followed by classification symbols)

H04L 1/00(2006.01); H04L 5/14(2006.01); H04W 28/16(2009.01); H04W 4/08(2009.01); H04W 4/10(2009.01); H04W 56/00(2009.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전송 블록(transport block, TB), 크기(size), 슬롯(slot), 물리 상향 링크 공유 채널 (physical uplink shared channel, PUSCH), 전-이중화(full-duplex, FD), 반-이중화(half-duplex, HD), 스케일링(scaling)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | US 2023-0058672 A1 (ZTE CORPORATION) 23 February 2023 (2023-02-23)<br>See paragraphs [0032], [0106], [0126]-[0128] and [0195]; claims 1-2; and figure 1. | 1-20 |
| Y | US 2022-0131680 A1 (QUALCOMM INCORPORATED) 28 April 2022 (2022-04-28)<br>See paragraphs [0038]-[0040], [0055], [0078], [0118] and [0127]-[0130]; claim 9; and figure 2. | 1-20 |
| Y | WO 2021-196130 A1 (QUALCOMM INCORPORATED) 07 October 2021 (2021-10-07)<br>See paragraphs [0099] and [0129]-[0130]; claim 1; and figure 12. | 4-7,12-15 |
| A | WO 2020-167098 A1 (LG ELECTRONICS INC.) 20 August 2020 (2020-08-20)<br>See claims 1-7. | 1-20 |
| A | US 2021-0076169 A1 (TAIT INTERNATIONAL LIMITED) 11 March 2021 (2021-03-11)<br>See claims 1-10. | 1-20 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **27 June 2024** | **27 June 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<table>
<tr><td colspan="2">**INTERNATIONAL SEARCH REPORT**<br>Information on patent family members</td><td colspan="2">International application No.<br><br>**PCT/KR2024/095667**</td></tr>
</table>

| Patent document cited in search report | | | Publication date (day/month/year) | Patent family member(s) | | | Publication date (day/month/year) |
|---|---|---|---|---|---|---|---|
| US | 2023-0058672 | A1 | 23 February 2023 | CN | 116097588 | A | 09 May 2023 |
| | | | | EP | 4082138 | A1 | 02 November 2022 |
| | | | | WO | 2022-032659 | A1 | 17 February 2022 |
| US | 2022-0131680 | A1 | 28 April 2022 | US | 11870737 | B2 | 09 January 2024 |
| WO | 2021-196130 | A1 | 07 October 2021 | CN | 115336347 | A | 11 November 2022 |
| | | | | EP | 4128938 | A1 | 08 February 2023 |
| | | | | US | 2023-0137215 | A1 | 04 May 2023 |
| WO | 2020-167098 | A1 | 20 August 2020 | CN | 113424632 | A | 21 September 2021 |
| | | | | CN | 113424632 | B | 25 July 2023 |
| | | | | EP | 3927078 | A1 | 22 December 2021 |
| | | | | EP | 3927078 | B1 | 24 January 2024 |
| | | | | US | 2022-0312406 | A1 | 29 September 2022 |
| US | 2021-0076169 | A1 | 11 March 2021 | US | 11089447 | B2 | 10 August 2021 |

Form PCT/ISA/210 (patent family annex) (July 2022)